# EUROPÄISCHE PATENTSCHRIFT

(11) **EP 3 622 026 B1**
(45) Veröffentlichungstag und Bekanntmachung des Hinweises auf die Patenterteilung: **07.07.2021**
(21) Anmeldenummer: 18724776.2
(22) Anmeldetag: 07.05.2018
(51) Int. Cl.: C09D 11/50, C09D 11/037, B41M 1/00, B41M 3/14

(54) **STICHTIEFDRUCKFARBE, DRUCKVERFAHREN UND DRUCKERZEUGNIS**
INTAGLIO PRINTING INK, PRINTING PROCESS AND PRINTED ARTICLE
ENCRES POUR IMPRESSION TAILLE-DOUCE, PROCÉDÉ D'IMPRESSION ET PRODUIT D'IMPRESSION

(30) Priorität: 11.05.2017 DE 102017004496
(43) Veröffentlichungstag der Anmeldung: 18.03.2020
(73) Patentinhaber: Giesecke+Devrient Currency Technology GmbH, 81677 München (DE)
(72) Erfinder: KECHT, Johann, 81677 München (DE); STEINLEIN, Stephan, 80538 München (DE); GIERING, Thomas, 85614 Kirchseeon (DE)
(86) Internationale Anmeldenummer: PCT/EP2018/000241
(87) Internationale Veröffentlichungsnummer: WO 2018/206144

(56) Entgegenhaltungen:
- WO-A1-2008/141972
- WO-A1-2017/080652
- WO-A1-2017/080653
- DE-A1- 10 326 983

## Beschreibung

Die Erfindung betrifft eine Stichtiefdruckfarbe, ein Druckverfahren und ein Druckerzeugnis jeweils auf Grundlage einer Kombination von lumineszierenden Kapsel-Lumineszenzpigmenten und mindestens einem weiteren maschinenlesbaren Merkmalsstoff. Die Erfindung gewährleistet die Bereitstellung multifunktionaler Stichtiefdruckfarben bzw. Intagliofarben sowie die Bereitstellung mittels eines Stichtiefdruckverfahrens erhältlicher Druckerzeugnisse. Insbesondere betrifft die Erfindung lumineszierende Druckerzeugnisse mit multifunktionalen Sicherheitsmerkmalen, beispielsweise Lumineszenz und NIR-Absorption, oder Lumineszenz und Magnetismus.

Das Verwenden der erfindungsgemäßen Kapsel-Lumineszenzpigmente ermöglicht es, die verschiedenen Funktionalitäten gleichzeitig zu realisieren, weil durch die hohe Lumineszenzintensität und die gute Einbringbarkeit in Druckfarben eine zu hohe Beladung (d.h. Pigmentierung) der Druckfarbe in vorteilhafter Weise vermieden werden kann.

Außerdem gewährleistet die erfindungsgemäße Stichtiefdruckfarbe zusätzliche vorteilhafte Effekte, wodurch neue und verbesserte Sicherheitsmerkmale generiert werden können. Beispielsweise kann ein mit NIR-Absorption ausgestattetes, mittels Stichtiefdruck erhältliches Druckerzeugnis bereitgestellt werden, wobei eine Lumineszenz mit der Farbe Weiß oder mit einer Komplementärfarbe des Farbeindrucks der Körperfarbe erfolgt, was einen hohen Wiedererkennungswert und eine hohe Fälschungssicherheit gewährleistet.

Im Zuge der Herstellung von Banknoten und anderen Wertdokumenten wird üblicherweise das sogenannte Intaglioverfahren bzw. Stichtiefdruckverfahren eingesetzt. Hierdurch ist es möglich, Bereiche mit sehr hohen Andruckstärken zu generieren, welche dann z.B. haptisch erkannt werden können (sogenannte ertastbare Druckmuster). Des Weiteren können maschinenlesbare Signale erzeugt werden, z.B. mittels Beladung mit magnetischen Pigmenten oder mit im infraroten Spektralbereich absorbierenden Stoffen etc. (nachstehend auch als "Merkmalsstoffe" bezeichnet). Außer Pigmenten und Merkmalsstoffen enthalten Intaglio-Farben zwangsläufig noch weitere funktionale Komponenten, die beispielsweise zur Einstellung der Viskosität und der Benetzungseigenschaften dienen oder die Aushärteeigenschaften bestimmen. Die Beladung der Stichtiefdruckfarbe mit Pigmenten, Merkmalsstoffen und weiteren funktionalen Komponenten kann dabei außergewöhnlich hoch werden, in speziellen Fällen können hier ein Gehalt von bis zu 80 Gewichtsprozent erreicht werden. Durch die hohe Andruckstärke und hohe Pigmentierung von Stichtiefdruckfarben kann mittels des Intaglio-Drucks besonders viel Merkmalsstoff auf das Wertdokument aufgebracht werden, um so ein geeignet hohes Messsignal zur Detektion von wenig intensiven Merkmalsstoffen zu erzeugen.

Unter der Bezeichnung "Wertdokument" sind im Rahmen der Erfindung Banknoten, Schecks, Aktien, Wertmarken, Ausweise, Pässe und auch andere Dokumente sowie Etiketten, Siegel, Verpackungen oder andere Elemente zur Produktsicherung zu verstehen.

Lumineszierende Intagliofarben bzw. Stichtiefdruckfarben sind allgemein bekannt. Typischerweise ist die Druckfarbe von mit magnetischen oder absorbierenden Merkmalen ausgestatteten, im Stichtiefdruck erzeugten Druckerzeugnissen jedoch in einem derart hohen Ausmaß mit dem Merkmalsstoff und weiteren funktionalen Komponenten beladen, dass eine weitere Beladung, z.B. mit anorganischen Lumineszenzstoffen, nicht mehr sinnvoll möglich ist. Organische Lumineszenzstoffe besitzen höhere Leuchtstärken und müssen daher in deutlich geringeren Mengen eingesetzt werden. Somit könnten solche organischen Lumineszenzstoffe theoretisch zusätzlich in eine mit einem Merkmalsstoff beladene Stichtiefdruckfarbe eingebracht werden. In der Praxis entstehen dadurch jedoch bedeutsame Nachteile:
Aufgrund der hohen Andruckstärken des Intagliodrucks werden organische Lumineszenzstoffe z.B. bei Kontakt mit organischen Lösemitteln herausgelöst und führen zu einem "Verschmieren" (bzw. "Herauslaufen" oder auch "Ausbluten") der Lumineszenz aus dem Andruck. Der dicke Andruck bildet hier sozusagen ein Reservoir, aus dem kontinuierlich Lumineszenzstoff nachgeliefert wird, sodass der Effekt hier stärker ausfällt als z.B. bei dünnen Offsetandrucken.

Besonders nachteilig fällt dieser Effekt bei Lumineszenzfarbsystemen aus, welche Mischungen aus mehreren verschiedenen Lumineszenzstoffen verwenden, um in Summe einen bestimmten Farbeindruck zu erzeugen (z.B. eine Mischung aus in Rot, in Grün und in Blau lumineszierenden Stoffen, um einen weißen Farbeindruck der Lumineszenz zu erzeugen). Hier potenziert sich die Anfälligkeit, da selbst in dem Fall, dass einer der organischen Lumineszenzstoffe stabil gegen ein bestimmtes Lösemittel sein sollte, die anderen Lumineszenzstoffe durch das Lösemittel herausgelöst werden können. Auch in diesem Fall ist dann ein Verschmieren des Lumineszenzdruckbilds bzw. eine Änderung des Farbeindrucks der Lumineszenz zu beobachten.

Besonders auffällig ist dies in Druckerzeugnissen, bei denen der Farbeindruck der Lumineszenzemission visuell mit einem zweiten Farbeindruck verglichen werden kann, z.B. wenn der Farbeindruck der Lumineszenz und der Farbeindruck der Körperfarbe gleich sind, oder bei Farbtönen mit einem hohen Wiedererkennungswert wie z.B. rein weißer Lumineszenz.

Der Erfindung liegt daher die Aufgabe zugrunde, verbesserte Stichtiefdruckfarben bereitzustellen, die sowohl eine Lumineszenzemission als auch ein weiteres maschinenlesbares Merkmal aufweisen. Dabei soll insbesondere der Farbeindruck der Lumineszenzemission innerhalb eines Farbsystems frei einstellbar sein und eine gute Stabilität gegenüber chemischen und physikalischen Einflüssen aufweisen.

Eine weitere Aufgabe besteht in der Bereitstellung eines Druckverfahrens und eines Druckerzeugnisses mit diesen Stichtiefdruckfarben.

Diese Aufgaben werden durch die in den Hauptansprüchen definierten Merkmalskombinationen gelöst. Bevorzugte Ausführungsformen sind Gegenstand der Unteransprüche.

### Zusammenfassung der Erfindung

1. (Erster Aspekt der Erfindung) Multifunktionale Stichtiefdruckfarbe enthaltend mindestens ein Kapsel-Lumineszenzpigment und mindestens einen weiteren maschinenlesbaren Merkmalsstoff,
   wobei das mindestens eine Kapsel-Lumineszenzpigment zumindest einen Kern mit einem Lumineszenzstoff und eine den zumindest einen Kern verkapselnde Hülle aufweist,
   wobei der Kern auf einem thermoplastischen Polymer oder einem organischen Additionspolymer basiert und
   wobei die Lumineszenzstoffe jeweils organische oder metallorganische Lumineszenzstoffe sind und
   wobei die Hülle aus einem Kondensationspolymer oder einem organischen Additionspolymer besteht und
   wobei die Stichtiefdruckfarbe bei 40°C eine Viskosität im Bereich von 3 Pas bis 25 Pas, bevorzugt im Bereich von 5 Pas bis 15 Pas aufweist. Die Hülle besteht bevorzugt aus einem Kondensationspolymer.
2. (Bevorzugte Ausgestaltung) Stichtiefdruckfarbe nach Absatz 1 enthaltend mindestens zwei Kapsel-Lumineszenzpigmente, die unterschiedliche Emissionsspektren der Lumineszenzemission aufweisen
   wobei für jedes der mindestens zwei Kapsel-Lumineszenzpigmente das Material des zumindest einen Kerns, das Material der Hülle und die Dicke der Hülle so aufeinander abgestimmt sind, dass die zumindest zwei Kapsel-Lumineszenzpigmente eine im Wesentlichen gleiche chemische Stabilität aufweisen. Insbesondere beträgt nach einer Exposition für 5 Minuten gegen Toluol, Ethylacetat, Salzsäure (5%), Natronlauge (2%) und Natriumhypochlorit-Lösung (5% aktives Chlor) der Unterschied zwischen den auf den Startwert normierten Lumineszenzintensitäten der Kapsel-Lumineszenzpigmente untereinander weniger als 20 Prozentpunkte, bevorzugt weniger als 10 Prozentpunkte, insbesondere bevorzugt weniger als 5 Prozentpunkte.
3. (Bevorzugte Ausgestaltung) Stichtiefdruckfarbe nach Absatz 1 oder 2, wobei der Merkmalsstoff ausgewählt ist aus: NIR-Absorbern, magnetischen Stoffen und lumineszierenden Stoffen.
4. (Bevorzugte Ausgestaltung) Stichtiefdruckfarbe nach einem der Absätze 1 bis 3, wobei der Merkmalsstoff einen Anteil von mehr als 10 Gewichtsprozent, bevorzugt mehr als 20 Gewichtsprozent, besonders bevorzugt mehr als 30 Gewichtsprozent, in einer weiteren Ausführung mehr als 40 Gewichtsprozent an der Stichtiefdruckfarbe hat. Die Gewichtsanteile beziehen sich jeweils auf die nasse, unverdruckte Stichtiefdruckfarbe.
5. (Bevorzugte Ausgestaltung) Stichtiefdruckfarbe nach einem der Absätze 1 bis 4, wobei die Stichtiefdruckfarbe zusätzlich mindestens ein Körperfarbpigment enthält.
6. (Bevorzugte Ausgestaltung) Stichtiefdruckfarbe nach einem der Absätze 1 bis 5, wobei der mindestens eine Merkmalsstoff, das mindestens eine Kapsel-Lumineszenzpigment und, falls enthalten, das mindestens eine Körperfarbpigment zusammen einen Anteil von weniger als 80 Gewichtsprozent, bevorzugt weniger als 60 Gewichtsprozent, besonders bevorzugt weniger als 45 Gewichtsprozent an der Stichtiefdruckfarbe haben. Die Gewichtsanteile beziehen sich jeweils auf die nasse, unverdruckte Stichtiefdruckfarbe.
7. (Bevorzugte Ausgestaltung) Stichtiefdruckfarbe nach einem der Absätze 1 bis 6, wobei die Hülle des mindestens einen Kapsel-Lumineszenzpigments aus einem Melamin-Formaldehyd- Kondensationspolymer besteht.
8. (Bevorzugte Ausgestaltung) Stichtiefdruckfarbe nach einem der Absätze 1 bis 7 kombiniert mit Absatz 2, wobei die mindestens zwei Kapsel-Lumineszenzpigmente jeweils das gleiche Kondensationspolymer als Hüllmaterial haben.
9a. (Bevorzugte Ausgestaltung) Stichtiefdruckfarbe nach einem der Absätze 1 bis 8, wobei das mindestens eine Kapsel-Lumineszenzpigment nach einem der Verfahren Variante 1, Variante 2 oder Variante 3 hergestellt werden.
9b. (Bevorzugte Ausgestaltung, Variante 1) Stichtiefdruckfarbe nach einem der Absätze 1 bis 9a, wobei das mindestens eine Kapsel-Lumineszenzpigment mindestens einen auf einem thermoplastischen Polymer basierenden Kern, eine auf einem Kondensationspolymer basierende Hülle und einen im Kern in gelöster oder fein verteilter Form vorliegenden organischen oder metallorganischen Merkmalsstoff aufweist,
   wobei der Massenanteil der Hülle mehr als 25%, bevorzugt 50%, besonders mehr als 100% relativ zur Masse des Kerns beträgt.
9c. (Bevorzugte Ausgestaltung, Variante 1) Stichtiefdruckfarbe nach Absatz 9b, wobei das thermoplastische Polymer gewählt ist aus Polystyrol (PS), Polyacrylaten, Polyethylen (PE), Polypropylen (PP), Polycarbonaten (PC), Polyamiden (PA), Polyurethanen (PU), Polyharnstoffen (PH), Polyethylenterephthalat (PET) oder anderen Polyestern, bevorzugt aus Polystyrol (PS) oder aus einem der Polyacrylate Polymethylmethacrylat (PMMA), Polyvinylazetat (PVAC), Polyvinylchlorid (PVC), Polyacrylnitril (PAN), Acrylnitril-Butadien-Styrol-Kopolymer (ABS), besonders bevorzugt aus Polystyrol (PS) oder Polymethylmethacrylat (PMMA).
9d. (Bevorzugte Ausgestaltung, Variante 1) Stichtiefdruckfarbe nach Absatz 9b oder 9c, wobei der Lumineszenzstoff im thermoplastischen Polymer gelöst vorliegt.
9e. (Bevorzugte Ausgestaltung, Variante 2) Stichtiefdruckfarbe nach einem der Absätze 1 bis 9a, wobei das mindestens eine Kapsel-Lumineszenzpigment mindestens einen auf einem organischen Additionspolymer basierenden Kern, eine auf einem organischen Kondensationspolymer basierende Hülle und einen im Kern in fein verteilter oder gelöster Form vorliegenden organischen oder metallorganischen Lumineszenzstoff aufweist, wobei das Additionspolymer ein dreidimensional vernetztes Duromer ist.
9f. (Bevorzugte Ausgestaltung, Variante 2) Stichtiefdruckfarbe nach Absatz 9e, wobei das Additionspolymer aus trimeren Isocyanatmonomeren, bevorzugt Isocyanurat-Trimeren von Isophorondiisocyanat und Aminen oder Alkoholen, bevorzugt Aminen gebildet wird.
9g. (Bevorzugte Ausgestaltung, Variante 2) Stichtiefdruckfarbe nach Absatz 9e oder 9f, wobei die Amine aus Mono-, Di- und Triaminen ausgewählt werden und bevorzugt Triamine umfassen.
9h. (Bevorzugte Ausgestaltung, Variante 2) Stichtiefdruckfarbe nach einem der Absätze 9e bis 9g, wobei das Kondensationspolymer der Hülle und das Additionspolymer des Kern mindestens ein gleiches Monomer als Polymerbestandteil beinhalten.
9i. (Bevorzugte Ausgestaltung, Variante 2) Stichtiefdruckfarbe nach einem der Absätze 9e bis 9h, wobei das Kondensationspolymer der Hülle Melamin als Monomer enthält und bevorzugt gleichzeitig das Additionspolymer des Kerns Melamin als Monomer enthält.
9j. (Bevorzugte Ausgestaltung, Variante 1 oder 2) Stichtiefdruckfarbe nach einem der Absätze 9b bis 9i, wobei das Kondensationspolymer der Hülle gewählt ist aus Aminoplasten, Phenoplasten, Melamin-Formaldehyd-Harzen (MF), Melamin-Phenol-Formaldehyd-Harzen (MPF), Phenol-Formaldehyd-Harzen (PF), Harnstoff-Formaldehyd-Harzen (UF), Melamin-Guanidin-Formaldehyd-Harzen oder Phenol-Resorzin-Formaldehyd-Harzen.
9k. (Bevorzugte Ausgestaltung, Variante 1 oder 2) Stichtiefdruckfarbe nach einem der Absätze 9b bis 9j, wobei das mindestens eine Kapsel-Lumineszenzpigment genau einen Kern und eine Hülle umfasst.
9l. (Bevorzugte Ausgestaltung, Variante 3) Stichtiefdruckfarbe nach einem der Absätze 1 bis 9a, wobei das mindestens eine Kapsel-Lumineszenzpigment umfasst:
   - eine Duromer-Matrix, sowie
   - eine Mehrzahl von darin eingebetteten Kernen aus einem thermoplastischen Polymer und
   - einem in den Kernen gelösten organischen oder metallorganischen Lumineszenzstoff.
9m. (Bevorzugte Ausführung, Variante 3) Stichtiefdruckfarbe nach Absatz 91, wobei das thermoplastische Polymer ausgewählt ist aus Polystyrol (PS), Polyacrylaten, Polymethylmethacrylat (PMMA), Polyvinylacetat (PVAC), Polyvinylchlorid (PVC), Polyacrylnitril (PAN), Acrylnitril-Butadien-Styrol-Kopolymer (ABS), Polyethylen (PE) oder Polypropylen (PP), Polycarbonaten (PC), Polyamiden (PA), Polyestern oder Polyethylenterephthalat (PET).
9n. (Bevorzugte Ausführung, Variante 3) Stichtiefdruckfarbe nach Absatz 91 oder 9m, wobei die Kettenlängen des thermoplastischen Polymers im Bereich 1000-1000000 g/mol, insbesondere bei 50000-250000 g/mol liegen.
9o. (Bevorzugte Ausführung, Variante 3) Stichtiefdruckfarbe nach einem der Absätze 91 bis 9n, wobei die Duromer-Matrix ein Additionspolymer umfasst, bevorzugt eine Mischung aus verschiedenen Mono-, Di- oder Triaminen und einem trimeren Isocyanatmonomer, besonders bevorzugt den Isocyanurat-Trimeren von Isophorondiisocyanat.
9p. (Bevorzugte Ausführung, Variante 3) Stichtiefdruckfarbe nach einem der Absätze 91 bis 9o, wobei die thermoplastischen Kernpartikel in der Duromer-Matrix in einer Konzentration zwischen 0,1 und 25 Gewichtsprozent, insbesondere 3 - 20 Gewichtsprozent vorliegen.
10. (Bevorzugte Ausführung) Stichtiefdruckfarbe nach einem der Absätze 1 bis 9o, wobei das mindestens eine Kapsel-Lumineszenzpigment im UV-Spektralbereich anregbar ist und im sichtbaren Spektralbereich emittiert.
11. (Bevorzugte Ausgestaltung) Stichtiefdruckfarbe nach einem der Absätze 1 bis 10, wobei das mindestens eine Kapsel-Lumineszenzpigment mit UVA-Strahlung, bevorzugt bei einer Wellenlänge von 365nm anregbar ist.
12. (Bevorzugte Ausgestaltung) Stichtiefdruckfarbe nach einem der Absätze 1 bis 10, wobei das mindestens eine Kapsel-Lumineszenzpigment mit UVC-Strahlung, bevorzugt bei einer Wellenlänge von 254nm anregbar ist.
13. (Bevorzugte Ausgestaltung) Stichtiefdruckfarbe nach einem der Absätze 1 bis 12, wobei in dem mindestens einen Kapsel-Lumineszenzpigment zwei unterschiedliche Lumineszenzstoffe in fein verteilter oder gelöster Form vorliegen die ein Energietransfersystem bilden, bei dem der erste Lumineszenzstoff nach Anregung seine Anregungsenergie partiell oder vollständig an den zweiten Lumineszenzstoff transferiert.
14. (Bevorzugte Ausgestaltung) Stichtiefdruckfarbe nach einem der Absätze 1 bis 12, wobei für das mindestens eine Kapsel-Lumineszenzpigment bei einer Exposition für 5 Minuten gegen Toluol, Ethylacetat, Salzsäure (5%), Natronlauge (2%) und Natriumhypochlorit-Lösung (5% aktives Chlor) die nach dem Test verbleibende Lumineszenzintensität höher ist als 80% der Anfangsintensität.
15. (Bevorzugte Ausgestaltung) Stichtiefdruckfarbe nach einem der Absätze 1 bis 14, wobei für das mindestens eine Kapsel-Lumineszenzpigment nach dem Testverfahren A5 mit Aceton die nach dem Test verbleibende Lumineszenzintensität höher ist als 80% der Anfangsintensität.
16. (Bevorzugte Ausgestaltung) Stichtiefdruckfarbe nach einem der Absätze 1 bis 15 in Kombination mit Absatz 2, wobei die zumindest zwei Kapsel-Lumineszenzpigmente die im Wesentlichen gleiche chemische Stabilität gegen Aceton nach dem Testverfahren A5 aufweisen, wobei die nach dem Test verbleibende Lumineszenzintensität höher ist als 80% der Anfangsintensität.
17. (Bevorzugte Ausgestaltung) Stichtiefdruckfarbe nach einem der Absätze 1 bis 16, wobei das mindestens eine Kapsel-Lumineszenzpigment nach Testverfahren B eine Lichtechtheit von mindestens Wollskala 3 erreicht.
18. (Bevorzugte Ausgestaltung) Stichtiefdruckfarbe nach einem der Absätze 1 bis 17 in Kombination mit Absatz 2, wobei die mindestens zwei Kapsel-Lumineszenzpigmente die im Wesentlichen gleiche Lichtechtheit haben, sich insbesondere nach Testverfahren B um weniger als 30 Prozentpunkte unterscheiden und bevorzugt mindestens Wollskala 3 erreichen.
19. (Bevorzugte Ausgestaltung) Stichtiefdruckfarbe nach Absatz 17 oder 18, wobei die Lichtechtheit mindestens eines Kapsel-Lumineszenzpigments durch eine Mischung unterschiedlich lichtechter Lumineszenzstoffe erhalten wird.
20. (Bevorzugte Ausgestaltung) Stichtiefdruckfarbe nach einem der Absätze 1 bis 19 in Kombination mit Absatz 2, wobei die zumindest zwei Kapsel-Lumineszenzpigmente unterschiedliche Farbeindrücke der Lumineszenzemission aufweisen.
21. (Bevorzugte Ausgestaltung) Stichtiefdruckfarbe nach einem der Absätze 1 bis 20 in Kombination mit Absatz 2, wobei sich der Farbeindruck der Lumineszenzemission von beliebigen Mischungen der Kapsel-Lumineszenzpigmente nach UV-Bestrahlung gemäß Testverfahren B bei Wollskala 1, bevorzugt bei Wollskala 2, besonders bevorzugt bei Wollskala 3 um weniger als ΔD < 0,03 verschiebt.
22. (Bevorzugte Ausgestaltung) Stichtiefdruckfarbe nach einem der Absätze 1 bis 21, das mindestens drei Kapsel-Lumineszenzpigmente mit jeweils unterschiedlichem Farbeindruck der Lumineszenzemission umfasst, wobei bevorzugt die jeweiligen Farbeindrücke der Lumineszenzemission rot, grün bzw. blau sind.
23. (Zweiter Aspekt der Erfindung) Druckverfahren, umfassend das Bedrucken eines Bedruckstoffes mit einer Stichtiefdruckfarbe nach einem der Absätze 1 bis 22 im Stichtiefdruckverfahren.
24. (Bevorzugte Ausgestaltung) Druckverfahren nach Absatz 23, wobei der Bedruckstoff ein Papiersubstrat oder ein Polymersubstrat ist oder aus einer Kombination von Papier und Polymer besteht. Eine Kombination von Papier und Polymer ist beispielsweise ein Folie/Papier/Folie-Verbund, oder ein Papier/ Folie/ Papier-Verbund.
25. (Dritter Aspekt der Erfindung) Druckerzeugnis, erhältlich durch das Druckverfahren nach Absatz 23 oder 24.
26. (Bevorzugte Ausgestaltung) Druckerzeugnis nach Absatz 25, wobei das Druckerzeugnis ein Wertdokument, insbesondere eine Banknote, ist.
27. (Bevorzugte Ausgestaltung) Druckerzeugnis nach Absatz 25 oder 26, wobei mindestens ein erster Teil des Druckerzeugnisses mit einer ersten Stichtiefdruckfarbe nach einem der Ansprüche 1 bis 21 bedruckt ist und mindestens ein zweiter, den ersten Teil nicht überlappender, Teil des Druckerzeugnisses mit einer zweiten Stichtiefdruckfarbe bedruckt ist, wobei die zweite Stichtiefdruckfarbe bevorzugt nach einem der Absätze 1 bis 21 definiert ist.
28. (Bevorzugte Ausgestaltung) Druckerzeugnis nach Absatz 27, wobei sich die zweite Stichtiefdruckfarbe anhand eines maschinenlesbaren Merkmals von der ersten Stichtiefdruckfarbe unterscheiden lässt.
29. (Bevorzugte Ausgestaltung) Druckerzeugnis nach Absatz 28, wobei das maschinenlesbare Merkmal ausgewählt ist aus: NIR-Absorption, Magnetisierung, Lumineszenz. Insbesondere ist das maschinenlesbare Merkmal ausgewählt aus: Spektrum der NIR-Absorption, Intensität der IR-Absorption, Magnetisierbarkeit, Remanenz, Koerzitivfeldstärke, Ausrichtung des Magnetfelds, Lumineszenzintensität, Lumineszenzspektrum sowie zeitliches Verhalten der Lumineszenz, insbesondere An- und Abklingzeit.
30. (Bevorzugte Ausgestaltung) Druckerzeugnis nach Absatz 28 oder 29, wobei die zweite Stichtiefdruckfarbe keinen maschinenlesbaren Merkmalsstoff enthält.
31. (Bevorzugte Ausgestaltung) Druckerzeugnis nach Absatz 28 oder 29, wobei die zweite Stichtiefdruckfarbe einen anderen maschinenlesbaren Merkmalsstoff enthält als die erste Stichtiefdruckfarbe.
32. (Bevorzugte Ausgestaltung) Druckerzeugnis nach Absatz 27 bis 31, wobei sich die zweite Stichtiefdruckfarbe durch den Farbeindruck ihrer Körperfarbe von der ersten Stichtiefdruckfarbe unterscheidet.
33. Druckerzeugnis nach einem der Absätze 27 bis 31, kombiniert mit Absatz 5, wobei der Farbeindruck der Körperfarbe für die erste und die zweite Stichtiefdruckfarbe gleich ist.

### Ausführliche Beschreibung der Erfindung

Die erfindungsgemäßen Kapsel-Lumineszenzpigmente gewährleisten die Bereitstellung von Intagliofarben bzw. Stichtiefdruckfarben, welche gleichzeitig sowohl über ein maschinenlesbares Merkmal mit hoher Pigmentierung verfügen, als auch eine lösemittelstabile, im Rahmen eines Farbsystems frei wählbare Lumineszenzfärbung zeigen.

Bevorzugt weisen die Kapsel-Lumineszenzpigmente dabei noch weitere Vorteile auf, z.B. eine hohe Kompatibilität mit Intagliodruckfarben, eine für den Intagliodruck geeignete Korngröße sowie eine geeignete Lichtstabilität, wobei diese Eigenschaften für alle Pigmente des Lumineszenzfarbsystems im Wesentlichen gleich sind. Hierdurch werden weitere Nachteile von Lumineszenzfarbsystemen des Standes der Technik vermieden, z.B. die Entmischung der Pigmente in der Druckfarbe, oder eine Veränderung des Lumineszenzfarbeindrucks bei längerer Sonnenbestrahlung.

Weiterhin ist es durch die freie Wählbarkeit des Lumineszenzfarbeindrucks (innerhalb der Grenzen des verwendeten Farbsystems) möglich, besonders wünschenswerte Farbkombinationen bzw. prägnante Farbkontraste einzustellen. Beispielsweise kann bei einem in hellblauer Farbe gefärbten Intagliodruck die Lumineszenz so eingestellt werden, dass bei Anregung der Lumineszenz der gleiche hellblaue Farbeindruck entsteht, was einen Effekt mit hohem Widererkennungswert erzeugt und gleichzeitig eine hohe Hürde für Fälscher darstellt, da selbst geringe Abweichungen vom Farbton durch den direkten Vergleich mit der Körperfarbe leicht festgestellt werden können.

Alternativ ist es möglich, als Farbeindruck der Lumineszenz die Komplementärfarbe der Körperfarbe (z.B. Orange) zu wählen, wodurch ein besonders gut erkennbarer visueller Effekt entsteht.

Weiterhin kann ein weißer Farbeindruck der Lumineszenz eingestellt werden, welcher ebenfalls einen hohen Wiedererkennungswert und eine hohe Hürde für Fälscher darstellt.

Die Möglichkeit, Stichtiefdruckfarben mit derartigen bevorzugten Farbkombinationen zu erstellen, bildet einen weiteren Vorteil gegenüber dem Stand der Technik.

Der Begriff "Intaglio" bezeichnet ein für den Banknotendruck übliches Tiefdruckverfahren (hierin auch "Stichtiefdruckverfahren" oder auch "Stahlstichtiefdruckverfahren" genannt). Der Intaglio-Druck bildet dabei an sich bereits ein für Banknoten typisches Sicherheitselement, da er einen erhabenen Druck erzeugt, der mit den Fingern ertastet werden kann.

Im Intaglio-Druck ist das Druckbild in eine rotierende Druckwalze eingraviert, wobei die Gravur eine Tiefe von typischerweise 30 bis 220 µm aufweist. Diese Druckwalze wird von einer oder mehreren Schablonen-Farbwalzen mit Druckfarbe versorgt, wobei auch ein Muster von mehreren Druckfarben auf die Druckwalze übertragen werden kann. Anschließend wird überschüssige Druckfarbe von den erhabenen Flächen der Druckwalze abgewischt, so dass die Druckfarbe nur in den Vertiefungen der Gravur zurückbleibt.

Die Druckfarbe aus den Vertiefungen der Druckwalze wird unter hohem Druck (bis zu 500 bar) auf das Substrat übertragen, wobei es sich beispielsweise um Papier oder Kunststoff in Blatt- oder Bahnform handeln kann. Durch den hohen Anpressdruck verformt sich das Substrat. Diese Verformung zusammen mit der hohen Andruckstärke führt zu der typischen Ertastbarkeit von Intaglio-Drucken.

Bedingt durch das spezielle Druckverfahren sind für den Intaglio-Druck spezielle Druckfarben nötig, sogenannte Stichtiefdruckfarben oder Intaglio-Farben. Diese zeichnen sich durch eine hohe Viskosität im Bereich von 1 Pas bis 15 Pas, bevorzugt im Bereich von 5 Pas bis 10 Pas, besonders bevorzugt im Bereich von 3 Pas bis 8 Pas bei 40°C aus. Außerdem enthalten Stichtiefdruckfarben typischerweise einen hohen Anteil (Beladung) an funktionalen Stoffen, z.B. Pigmenten, Füllstoffen, Merkmalsstoffen, Benetzungsmitteln, UV-aushärtenden Harzen etc. Die Beladung mit funktionalen Stoffen beträgt mehr als 20 Gewichtsprozent, bevorzugt mehr als 40 Gewichtsprozent, in einer weiteren Ausführung mehr als 60 Gewichtsprozent.

Bei einer zu hohen Beladung mit Pigmenten und Merkmalsstoffen können jedoch keine ausreichenden Mengen der sonstigen funktionalen Stoffe verwendet werden, so dass sich die Druckeigenschaften einer Stichtiefdruckfarbe verschlechtern. Die Beladung mit Pigmenten und Merkmalsstoffen muss daher weniger als 80 Gewichtsprozent, bevorzugt weniger als 60 Gewichtsprozent, besonders bevorzugt weniger als 45 Gewichtsprozent betragen.

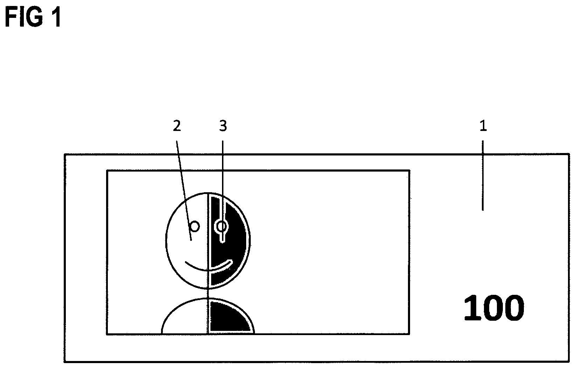

Zusätzlich zur Bereitstellung eines taktilen Sicherheitsmerkmals wird die hohe Schichtdicke eines im Intaglio-Verfahren erzeugten Drucks auch genutzt, um magnetische, absorbierende oder lumineszierende Merkmalsstoffe in ausreichender Menge auf eine Banknote aufzubringen, um ein maschinelles Auslesen zu ermöglichen. Besonders häufig werden dabei im infraroten Spektralbereich absorbierende Stoffe eingesetzt, sogenannte NIR-Absorber. Die mit dem Intagliodruck gedruckten Bereiche werden dabei häufig eingefärbt, sodass der resultierende Druck eine Körperfarbe hat, beispielsweise ein rotes Portrait einer historischen Persönlichkeit oder ein hellblaues Gebäude. Meistens wird dabei ein Teil des Drucks ohne das Merkmal gedruckt und ein Teil des Drucks mit dem Merkmal gedruckt, um einen sogenannten "Schnitt" zu erzeugen. Beispielsweise kann der linke Teil eines roten Portraits keinen NIR-Absorber enthalten, der rechte Teil eines Portraits jedoch NIR-Absorber enthalten. Dies ist in Abbildung 1 gezeigt: Eine Banknote (1) weist ein im Intaglio-Verfahren gedrucktes Portrait auf. Der linke Teil (2) besteht aus einer Stichtiefdruckfarbe mit rotem Körperfarbeindruck ohne weitere maschinenlesbare Merkmale. Der rechte Teil (3) besteht aus einer Stichtiefdruckfarbe mit demselben roten Körperfarbeindruck, die zusätzlich einen NIR-Absorber enthält. Bei normaler Betrachtung mit dem Auge erscheint das rote Portrait einheitlich. Bei Betrachtung mit einem geeigneten Infrarotremissionsmessgerät erscheint jedoch nur der rechte Teil des Portraits, während der linke Teil leer bleibt, es handelt sich hier um einen sogenannten Infrarot-Schnitt. In analoger Weise können aus magnetischen oder lumineszierenden Merkmalen z.B. Magnetschnitte oder Lumineszenzschnitte etc. erstellt werden. Beispiele für magnetische Merkmalsstoffe sind magnetisierbare ferro- und ferrimagnetische Stoffe wie beispielsweise hartmagnetische und weichmagnetische Eisenoxide, Ferrite wie z.B. Mangan-Zink-Ferrite oder Strontium-Ferrit SrFe₁₂O₁₉, und Metallpartikel wie Eisen oder Kobalt. Als Druckpigmente werden sowohl Partikel aus diesen Materialien eingesetzt (z.B. Fe₃O₄-Partikel) als auch magnetische Schichtpigmente oder magnetische Effektpigmente, welche aus mehreren Einzelschichten auf einem plättchenförmigen Trägermaterial bestehen, wobei nur einzelne Schichten aus den magnetischen Materialien bestehen (z.B. ein SiO₂-Plättchen welches abwechselnd mit mehreren Schichten aus TiO₂, SiO₂ und Fe₂O₃ beschichtet wurde). Bevorzugt handelt es sich bei dem magnetischen Merkmalsstoff um ein Pigment mit reduzierter Körperfarbe auf Basis von Kern-Hülle-Teilchen. Hierbei wird ein magnetisierbarer Kern mit starker Körperfarbe, beispielsweise ein Eisenoxid-Kern, mit einer speziellen Hülle umgeben, welche durch Interferenzeffekte und/oder Lichtstreuung die Körperfarbe der Pigmente modifiziert. Beispielsweise beschreibt die Schrift EP1548071A die Beschichtung von Eisenoxid mit Silika und/oder Titandioxid-Schichten um beliebige Körperfarben zu erzeugen. Weiterhin beschreiben die Schriften US5763085, WO2008148201A1, WO2013094993A1 und EP1179507A1 beschichtete magnetische Partikel mit weißer bzw. reduzierter Körperfarbe.

Beispiele für NIR-Absorber als Merkmalsstoffe sind anorganische NIR-Absorber mit starken Absorptionsbanden im Wellenlängenbereich zwischen 800 nm und 2500 nm, beispielsweise bestimmte Boride, wie sie unter anderem in der Schrift DE102008049595 beschrieben werden, oder Indium-ZinnOxid und andere Verbindungen wie sie unter anderem in der Schrift US 2010/0059691 A1 beschrieben werden. Bevorzugt handelt es sich beim absorbierenden Merkmalsstoff um spezielle NIR-Absorber mit keiner bzw. nur geringer Körperfarbe, wie Seltenerdphosphate oder spezielle Übergangsmetallverbindungen und reduzierte Heteropolysäuren, welche unter anderem in den Schriften US 2008/0087189 A1, EP1790701B2 und US4244741 beschrieben werden.

Anorganische NIR-Absorber besitzen mehrere Vorteile gegenüber organischen NIR-Absorbern, insbesondere in ihrer Stabilität gegenüber Chemikalien und Licht. Weiterhin können sie spezifische Signaturen in ihrem Absorptionsspektrum aufweisen wodurch sie von anderen Stoffen wie z.B. organischen NIR-Absorbern, unterschieden werden können, was relevant für ihren Einsatz als Sicherheitsmerkmal ist. In einer bevorzugten Ausführungsform handelt es sich bei dem NIR-Absorber daher um einen anorganischen NIR-Absorber.

Häufig werden im Sicherheitsbereich jedoch auch organische bzw. anorganische NIR-Absorber eingesetzt, welche ihrerseits spezifische Absorptionsspektren aufweisen können, welche sich von denen der anorganischen NIR-Absorber unterscheiden. In einer weiteren bevorzugten Ausführungsform werden daher organische NIR-Absorber verwendet. Insbesondere handelt es sich dabei um metallorganische Pigmente, wie Metall-Phthalocyanine (z.B. Kupfer-Phthalocyanin). Weitere geeignete Klassen sind Cyanine, Naphthalocyanine, Ammoniumsalze, Seltenerdkomplexe und Übergangsmetallkomplexe, beispielsweise Nickel-, Palladium-, und Platin-Komplexe.

Nicht bevorzugt sind Stoffe wie Ruß, da es sich hier um einen unspezifischen organischen NIR-Absorber mit starker Körperfarbe handelt.

Beispiele für lumineszierende Merkmalsstoffe sind lumineszierende anorganische Stoffe, bevorzugt phosphoreszierende Stoffe mit einer Abklingzeit von mehr als 250 µs, da hierdurch eine einfache maschinelle Auswertung des Phosphoreszenz-Emissionsspektrums ermöglicht wird.

Bevorzugt handelt es sich bei den lumineszierenden Stoffen um Oxide, Oxysulfide oder Sulfide, beispielsweise um mit Kupfer, Mangan oder Silber dotiertes Zinksulfid. Bevorzugt handelt es sich bei dem lumineszierenden Stoff um eine mit Übergangsmetallen oder Seltenerdkationen dotierte Matrix, beispielsweise CaSiO₃:Mn oder LaPO₄:Ce, Tb. Bevorzugt ist der lumineszierende Stoff im UV-Bereich anregbar, besonders bevorzugt bei 365 nm. Bevorzugt emittiert der lumineszierende Stoff im VIS-Bereich zwischen 400 nm und 700 nm.

Die Beladung der Druckfarbe mit dem Merkmalsstoff ist üblicherweise sehr hoch, z.B. 25 Gewichtsprozent, um eine ausreichende Signalintensität zu generieren. Eine deutliche Erhöhung, z.B. um weitere Merkmalsstoffe einzubringen, ist dann nicht mehr bzw. nur unter massiver Verschlechterung der Druckeigenschaften möglich, da die Stichtiefdruckfarbe zwingend auch noch weitere Komponenten wie Benetzungsmittel oder Harze enthalten muss. Es ist daher z.B. möglich, eine Stichtiefdruckfarbe mit 25 Gewichtsprozent eines Magnetpigments zu beladen und eine andere Stichtiefdruckfarbe mit 40 Gewichtsprozent eines anorganischen Lumineszenzstoffes zu beladen. Eine multifunktionelle Stichtiefdruckfarbe, welche beide Stoffe gleichzeitig mit insgesamt 65 Gewichtsprozent Pigmentierung enthält, ist jedoch nicht mehr sinnvoll herstellbar.

Wie bereits beschrieben, lässt sich dieses Problem durch Verwendung von organischen Lumineszenzstoffen lösen, welche aufgrund ihrer höheren Effizienz dann z.B. nur noch eine Farbbeladung von 2 Gewichtsprozent benötigen, sodass eine multifunktionelle Stichtiefdruckfarbe, wie sie im vorherigen Absatz beschrieben wurde, nur noch eine Pigmentierung von 27 Gewichtsprozent benötigt, was keiner deutlichen Beeinflussung der Druckeigenschaften führt. Wie bereits beschrieben, ergeben sich daraus jedoch Nachteile, welche durch die erfindungsgemäßen Kapsel-Lumineszenzpigmente jedoch vermieden werden. Weiterhin ergeben sich wie bereits beschrieben mehrere Vorteile durch Verwendung derartiger Pigmente.

Um den negativen Effekt einer zusätzlichen Pigmentierung der Druckfarbe weiter zu minimieren, ist es sinnvoll, die Oberfläche der Kapsel-Lumineszenzpigmente so zu wählen, dass sie eine gute Kompatibilität zur Formulierung der Druckfarben aufweist. Bevorzugt haben alle unterschiedlichen Kapsel-Lumineszenzpigmente des Lumineszenzfarbsystems (z.B. rot lumineszierende Pigmente, grün lumineszierende Pigmente und blau lumineszierende Pigmente) die gleiche Art von Hülle. Hierdurch wird sowohl eine Entmischung der unterschiedlichen Kapsel-Lumineszenzpigmente in der Druckfarbe verhindert, als auch eine gute Einbringbarkeit in die Druckfarbe gewährleistet.

Eine besonders hohe Kompatibilität zu den meisten gängigen IntaglioDruckfarben weisen Polymere auf Basis von Melamin-Formaldehyd (MF) auf. Beispielsweise werden MF-Partikel oft als Additive zur Verbesserung der Druckeigenschaften in Druckfarben verwendet. Bevorzugt besteht daher die Hülle der Kapsel-Lumineszenzpigmente aus einem Kondensationspolymer, besonders bevorzugt aus MF-Polymer. Mit Kondensationspolymer sind in diesem Fall insbesondere MF-analoge Kondensationspolymere, wie z.B. Harnstoff-Formaldehyd oder Melamin-Phenol-Formaldehyd gemeint.

In einer bevorzugten Ausführungsform enthält die Stichtiefdruckfarbe mehr als 10 Gewichtsprozent, bevorzugt mehr als 20 Gewichtsprozent, besonders bevorzugt mehr als 40 Gewichtsprozent an Merkmalsstoff. Bevorzugt enthält die Stichtiefdruckfarbe weniger als 10 Gewichtsprozent an Kapsel-Lumineszenzpigmenten, besonders bevorzugt weniger als 5 Gewichtsprozent, ganz besonders bevorzugt weniger als 2 Gewichtsprozent.

Bei dem maschinenlesbaren Merkmalsstoff handelt es sich bevorzugt um einen anorganischen Merkmalsstoff. In einer bevorzugten Ausführungsform handelt es sich um ein anorganisches Magnetpigment. In einer weiteren bevorzugten Ausführungsform handelt es sich um ein anorganisches NIR-Absorberpigment. In einer weiteren bevorzugten Ausführungsform handelt es sich um ein anorganisches Phosphoreszenzpigment.

In einer bevorzugten Ausführungsform enthält die Druckfarbe ein Farbpigment, um den visuellen Farbeindruck des Andrucks (die Körperfarbe) einzustellen. Ein solches Pigment wird im Folgenden als "Körperfarbpigment" bezeichnet. In dieser Variante hat man somit eine Stichtiefdruckfarbe mit mindestens drei Pigmentsorten: einem Körperfarbpigment, einem Merkmalspigment (Merkmalsstoff) und den Kapsel-Lumineszenzpigmenten.

In einer bevorzugten Ausführungsform hat die Druckfarbe keine bzw. nur eine geringe Eigenfarbe (sogenanntes "clear intaglio"). Hierbei werden als Merkmalsstoff spezielle Pigmente mit geringer Eigenfarbe eingesetzt, welche gegenüber herkömmlichen, gefärbten Merkmalsstoffen oft weniger Effizienz besitzen und daher höher in der Druckfarbe pigmentiert sein müssen. Daher ist hier der Einsatz der erfindungsgemäßen Kapsel-Lumineszenzpigmente besonders vorteilhaft, um die maximal einsetzbare Pigmentierung in der Druckfarbe nicht zu überschreiten bzw. die Druckeigenschaften möglichst wenig negativ zu beeinflussen.

In einer bevorzugten Ausführungsform hat der maschinenlesbare Merkmalsstoff keine bzw. nur eine sehr geringe Körperfarbe, und die Druckfarbe enthält ein Farbpigment, um die Körperfarbe einzustellen. Die geringe Eigenfarbe des Merkmalsstoffes erlaubt es hier unter anderem, Farbtöne einzustellen, welche mit stark gefärbten Merkmalsstoffen, wie z.B. dunkelbraunen Magnetpigmenten, nicht möglich wären. Weiterhin wird ein Anpassen der Körperfarbe zwischen den Merkmalsstoff enthaltenden Druckbereichen und den keinen Merkmalsstoff enthaltenden Druckbereichen eines Schnitts erleichtert.

In einer bevorzugten Ausführungsform ist die Stichtiefdruckfarbe dunkel gefärbt, besonders bevorzugt schwarz. Bevorzugt ist der Farbeindruck der Lumineszenz hell, besonders bevorzugt weiß.

In einer bevorzugten Ausführungsform besitzen die unterschiedlichen Bereiche eines Schnitts einen unterschiedlichen Farbeindruck der Lumineszenz.

Das erfindungsgemäße Lumineszenzfarbsystem zeichnet sich dadurch aus, dass die unterschiedlichen Kapsel-Lumineszenzpigmente jeweils vergleichbare chemische und physikalische Stabilitäten aufweisen. Hierdurch wird eine ungleichmäßige Veränderung des Lumineszenz-Farbeindrucks durch chemische und physikalische Faktoren (z.B. Migration, Umwelteinflüsse, organische Lösungsmittel, Säuren und Basen, UV-Bestrahlung, Tageslicht) verhindert.

Die erfindungsgemäßen Kapsel-Lumineszenzpigmente bestehen aus mindestens einem Kern eines ersten Materials, in welchem ein Lumineszenzstoff verteilt ist, und einer Hülle aus einem zweiten Material. Bevorzugt sind das erste und zweite Material unterschiedliche Polymere.

Es existieren dabei zwei grundlegende Formen von Kapsel-Lumineszenzpigmenten: (a) Kapsel-Lumineszenzpigmente mit einem einzelnen Kern und (b) Kapsel-Lumineszenzpigmente mit mehreren Kernen.

Gemäß einer bevorzugten Ausführungsform handelt es sich bei den Kapsel-Lumineszenzpigmenten um Kapsel-Lumineszenzpigmente mit einem einzelnen Kern. Es liegt dabei ein einzelner Kern vor, der von einer Hülle umgeben ist. Hierbei wird ein besonders hoher Schutz gegen Chemikalien erreicht, da die Hülle den Kern homogen umschließen kann. Diese Ausführungsform liefert somit qualitative Vorteile.

Gemäß einer weiteren bevorzugten Ausführungsform handelt es sich bei den Kapsel-Lumineszenzpigmenten um Kapsel-Lumineszenzpigmente mit mehreren Kernen. Hierbei liegen mehrere Kerne in einem Hüllmaterial verteilt vor. Da es hier möglich ist, dass sich einzelne Kerne an bzw. nahe der Außenoberfläche befinden und somit weniger Schutz durch die Hülle erfahren, wird hier eine im Vergleich zu Kapsel-Lumineszenzpigmenten mit einem einzelnen Kern weniger starke Schutzwirkung gegen Chemikalien erreicht. Derartige Partikel können jedoch deutlich kostengünstiger hergestellt werden und verfügen immer noch über hohe Chemikalienstabilitäten.

Diese Ausführungsform liefert somit herstellungstechnische Vorteile.

Gemäß einer bevorzugten Ausführungsform weisen alle Kapsel-Lumineszenzpigmente des Lumineszenzfarbsystems die gleiche Hülle auf, wobei die Hülle vorzugsweise auf einem Kondensationspolymer basiert, besonders bevorzugt auf einem Melamin-Formaldehyd-Kondensationspolymer basiert. Bevorzugt handelt es sich dabei um Kapsel-Lumineszenzpigmente mit einem Kern und einer Hülle.

Gemäß einer weiteren bevorzugten Ausführungsform weisen alle Kapsel-Lumineszenzpigmente des Lumineszenzfarbsystems die gleiche Hülle auf, wobei die Hülle vorzugsweise auf einem Additionspolymer basiert, besonders bevorzugt auf einem Isocyanat-basiertem Additionspolymer welches unter anderem Melamin als Monomer enthält. Bevorzugt handelt es sich dabei um Kapsel-Lumineszenzpigmente mit mehreren Kernen und einer Hülle.

Gemäß einer bevorzugten Ausführungsform weisen die erfindungsgemäßen Kapsel-Lumineszenzpigmente sehr dicke Hüllen auf, das heißt, der Gewichtsanteil der Hülle relativ zum Gewichtsanteil des Kerns beträgt mehr als 20%, bevorzugt mehr als 30%, besonders bevorzugt mehr als 50%.

Im Folgenden werden drei bevorzugte Varianten genannt, welche geeignete Kapsel-Lumineszenzpigmente beschreiben.

### Variante 1: Kapsel-Lumineszenzpigmente mit einem Kern aus Thermoplasten und einer Kondensationspolymer-Hülle

Gemäß der vorliegenden Variante werden die Lumineszenzstoffe in einen thermoplastischen Polymer-Kern, z.B. aus Polymethylmethacrylat (PMMA) oder Polystyrol (PS), eingebettet und mit einer Hülle aus einem quervernetzten polaren Kondensationspolymer, z.B. aus Melamin-Formaldehyd-Harz (MF), umhüllt. Die Hülle aus MF schützt den Lumineszenzstoff infolge ihrer Beschaffenheit als quervernetztes unlösliches Polymer insbesondere vor organischen Lösemitteln. Der Kern aus PMMA oder PS schützt den Lumineszenzstoff vor wässrigen oder stark polaren Lösemitteln, die durch das MF diffundieren könnten. Weiterhin nehmen PMMA und PS die meisten Lumineszenzstoffe sehr gut auf und ermöglichen so deren homogene Verteilung im Kernmaterial. Neben PMMA/PS und MF können auch andere Polymerarten mit ähnlichen Eigenschaften verwendet werden, um analoge Kapsel-Lumineszenzpigmente zu erzeugen.

Es wird ein maßgeschneiderter, mehrstufiger Schutz gegenüber einem breiten Spektrum chemischer Angriffe erzielt.

Gegenstand der vorliegenden Variante 1 ist insbesondere ein spezielles Verfahren zur Herstellung von Kapsel-Lumineszenzpigmenten aus einem thermoplastischen unvernetzten Polymer (z.B. PMMA, PS) und einem stark quervernetztem, polaren Kondensationspolymer (MF).

Dabei werden Lösungsmittel-haltige Tropfen gebildet, umhüllt und anschließend das Lösemittel entfernt, um schließlich umhüllte feste Kerne zu erhalten.

Das unvernetzte (Kern-)Polymer wird zusammen mit einem Lumineszenzstoff in einem organischen Lösemittel gelöst und mithilfe eines Emulgators in Form kleiner Tröpfchen dispergiert. Anschließend werden die Tröpfchen durch schwach vernetztes Hüllmaterial umhüllt, das Lösungsmittel aus dem Kern entfernt (wodurch das Kernpolymer zusammen mit dem darin verteilten Lumineszenzstoff im Kern ausfällt) und die Hülle anschließend durch weitere Vernetzung abgeschlossen.

Der erste Prozessschritt basiert auf der Emulgierung von Tröpfchen aus organischen Lösemitteln in Wasser. Dafür sind nur solche Lösungsmittel geeignet, die in Wasser eine separate Phase ausbilden, das heißt nicht oder kaum mit Wasser mischbar sind. Dazu zählen beispielsweise bestimmte Ester wie Ethylacetat, bestimmte aromatische Lösemittel wie Toluol und Benzol, bestimmte Ether wie THF und bestimmte halogenierte Lösungsmittel. Bevorzugt wird als organisches Lösemittel ein chloriertes Lösungsmittel verwendet, wie z.B. Chloroform, Dichlormethan, 1,1,1-Trichlorethan, Trichlorethylen oder Tetrachlorethylen.

Als Kernpolymer geeignet sind sämtliche in den bevorzugten organischen Lösungsmitteln lösliche Polymere, bevorzugt in chlorierten Lösemitteln lösliche Polymere. Um die Löslichkeit zu erhöhen, sind die Polymere des Kernmaterials bevorzugt unverzweigt oder nur schwach verzweigt.

Die Kettenlängen der Polymere des Kernmaterials liegen dabei bevorzugt im Bereich von 1000 bis 1 000 000 g/mol, besonders bevorzugt bei 50 000 bis 250 000 g/mol.

Das Polymer des Kernmaterials besteht aus Thermoplasten, bevorzugt aus einem thermoplastischen, unvernetzten Polymer. Gemäß einer bevorzugten Ausführungsform besteht das Polymer des Kernmaterials aus polymerisierten Ethylenderivaten, insbesondere bevorzugt aus Polystyrol (PS) oder Polyacrylaten, darunter bevorzugt Polymethylmethacrylat (PMMA), Polyvinylacetat (PVAC), Polyvinylchlorid (PVC), Polyacrylnitril (PAN) oder aus einem zwei oder mehrere dieser Polymere enthaltenden Kopolymer wie z.B. Acrylnitril-Butadien-Styrol-Kopolymer (ABS). Gemäß einer weiteren bevorzugten Ausführungsform handelt es sich bei den Ethylenderivaten um Polyethylen (PE), Polypropylen (PP) oder andere aus aliphatischen Kohlenstoffketten aufgebaute Polymere.

Gemäß einer weiteren bevorzugten Ausführungsform besteht das Polymer des Kernmaterials aus Polycarbonaten (PC), Polyamiden (PA) oder Polyestern wie Polyethylenterephthalat (PET).

Als Tenside bzw. Emulgatoren sind Stoffe geeignet, die das entsprechende organische Lösungsmittel in Wasser dispergieren können, beispielsweise nichtionische Tenside, anionische Tenside, kationische Tenside, amphotere Tenside. Bevorzugt werden anionische Tenside verwendet, oder eine Mischung aus anionischen Tensiden und nichtionischen Tensiden. Bevorzugte anionische Tenside sind Sulfat-basierte Tenside, z.B. Fettalkoholsulfate (Alkylsulfate) oder Fettalkoholethersulfate. Gemäß einer weiteren Ausführungsform sind die bevorzugten anionischen Tenside Carboxylat-basierte Tenside, z.B. Alkylcarboxylate. Gemäß einer weiteren Ausführungsform sind die bevorzugten anionischen Tenside Sulfonat-basierte Tenside, z.B. Alkylsulfonate. Gemäß einer weiteren Ausführungsform sind die bevorzugten anionischen Tenside Phosphat-basierte Tenside, z.B. Alkyletherphosphate.

Anionische Tenside haben den Vorteil, dass durch die negative Ladung der Kopfgruppe die Anlagerung von positiv geladenen Kondensationsprodukten aus der Hüllenbildung gefördert wird.

Bevorzugt werden die Tenside in einer Menge von 0,0001 bis 10 Gew.-% der wässrigen Lösung eingesetzt, weiter bevorzugt 0,1 bis 5 Gew.-%, insbesondere bevorzugt 0,5 bis 2 Gew.-%.

Die das Polymer (und den Lumineszenzstoff) enthaltende organische Phase wird mithilfe des Tensids in der wässrigen Phase dispergiert.

Bevorzugt beträgt der Anteil des gelösten Polymers im organischen Lösungsmittel 1 bis 20%, insbesondere bevorzugt 3 bis 10%.

Bevorzugt beträgt der Anteil der organischen Phase 1 bis 60 Vol.-% des Phasengemischs, insbesondere bevorzugt 10 bis 30 Vol.-%. Bei kleineren Anteilen werden nur geringe Ausbeuten erzielt, bei größeren Anteilen wird die homogene Dispersion der organischen Phase erschwert, was sich jeweils mit Nachteil auf die Wirtschaftlichkeit des Verfahrens auswirkt.

Die Dispersion der organischen Phase in der wässrigen Phase erfolgt bevorzugt mechanisch, z.B. durch Rühren, Ultraschall oder spezielle Geräte zum gezielten Einbringen von Scherkräften. Bevorzugt werden Homogenisiersysteme wie z.B. sogenannte Homogenizer-Aggregate oder Rotor-Stator-Systeme wie z.B. Systeme des Typs Ultra-Turrax der Firma IKA verwendet.

Die Dispersion der organischen Phase in der wässrigen Phase kann einmalig oder kontinuierlich erfolgen. Bei einer einmaligen Dispergierung wird die Dispersion zum Start der Reaktion, z.B. durch kurze Behandlung mit einem Homogenisierungssystem, eingestellt, und wird im weiteren Verlauf z.B. nur noch durch ein zweites, nicht zur Dispersion geeignetes System gerührt bzw. durchmischt. Das Homogenisierungssystem wird also nur kurzzeitig eingesetzt, die Dispersion bleibt jedoch auch ohne weiteren Einsatz stabil. Bei einer kontinuierlichen Dispergierung wird das Homogenisierungssystem über die gesamte Reaktionszeit eingesetzt. Hier wird im Normalfall kein zweites System zum Rühren/Durchmischung der Reaktionslösung benötigt.

Beim Polymer des Hüllmaterials handelt es sich bevorzugt um stark vernetzte Duroplaste. Gemäß einer bevorzugten Ausführungsform besteht das Polymer des Hüllmaterials aus durch Kondensationsreaktionen polymerisierten Einheiten wie z.B. Aminoplasten und Phenoplasten, insbesondere bevorzugt aus Aminoplasten. Bevorzugt handelt es sich dabei um Melamin-Formaldehyd-Harze (MF), Melamin-Phenol-Formaldehyd-Harze (MPF), Phenol-Formaldehyd-Harze (PF), Harnstoff-Formaldehyd-Harze (UF), sowie damit verwandte Harztypen, z.B. Melamin-Guanidin-Formaldehyd-Harze oder Phenol-Resorzin-Formaldehyd-Harze. Gemäß einer weiteren bevorzugten Ausführungsform wird im Harzmaterial das Formaldehyd ganz oder teilweise durch ein anderes Aldehyd ersetzt, z.B. durch Furfural.

Zur Erzeugung der Hülle wird bevorzugt ein wasserlösliches Präpolymerisat eingesetzt. Dabei können sowohl kommerziell erhältliche Präpolymerisate (z.B. Cymel 300 der Firma Allnex) oder aus den jeweiligen Einzelkomponenten, z.B. Melamin und Formaldehyd, durch Erhitzen in wässriger Lösung hergestellte Präpolymerisate eingesetzt werden.

Bevorzugt enthält das Präpolymerisat methylolisierte Amine, insbesondere bevorzugt methylolisiertes Melamin.

Das Präpolymerisat kann vor, während oder nach der Einbringung und Dispergierung der organischen Phase und der wässrigen Phase in die wässrige Phase eingebracht werden. Bevorzugt wird das Präpolymerisat nach Dispergierung der organischen Phase hinzugefügt, da hierdurch oft eine homogenere Tröpfchengröße der dispergierten Phase erreicht wird.

Gemäß einem bevorzugten Anwendungsfall wird die gesamte benötigte Menge an Präpolymerisat auf einmal zugefügt.

Gemäß einem weiteren bevorzugten Anwendungsfall wird die benötigte Menge an Präpolymerisat portionsweise zugegeben, beispielsweise eine Hälfte zum Start der Reaktion und die zweite Hälfte nach Entfernen des organischen Lösemittels.

Gemäß einem weiteren bevorzugten Anwendungsfall wird das Präpolymerisat über die gesamte Reaktionszeit oder über Teile der Reaktionszeit kontinuierlich zugegeben, beispielsweise über eine elektronisch gesteuerte Dosierpumpe.

Die Zugabemengen und Zugabezeitpunkte können die Dichtigkeit der gebildeten Hülle beeinflussen, da z.B. durch eine portionsweise Zugabe Fehlstellen, welche in einem ersten Schritt der Hüllbildung entstanden sind, wieder verschlossen werden können und insgesamt ein kontrollierteres Wachstum der Schicht möglich wird. Insbesondere wird bevorzugt, dass ein Teil des Präpolymerisats erst hinzugefügt wird, nachdem das organische Lösemittel komplett entfernt wurde.

Wird das gesamte Präpolymerisat erst zugegeben, nachdem das organische Lösemittel entfernt wurde, erfolgt keine abdichtende Schichtbildung. Das Vorhandensein des organischen Lösemittels ist ein integraler Bestandteil für die Anlagerung der MF-Hülle, eine Anlagerung an "nacktes" bereits ausgefallenes Kernmaterial erfolgt nicht.

Um die Geschwindigkeit und das Ausmaß der Polymerisierung des Präpolymerisats zu steuern, wird der pH-Wert eingestellt. Die Einstellung kann am Anfang der Reaktion erfolgen und konstant bleiben oder kann stufenweise oder kontinuierlich verändert werden. Gemäß einer bevorzugten Ausführungsform wird der pH-Wert am Reaktionsanfang eingestellt und über die Reaktionszeit konstant belassen. Gemäß einer weiteren bevorzugten Ausführungsform wird der pH-Wert zu bestimmten Zeitpunkten des Reaktionsverlaufs angepasst, beispielsweise wird der pH-Wert am Anfang der Reaktion nicht angepasst, zu einem späteren Zeitpunkt durch Säurezugabe auf einen ersten Wert eingestellt und zu einem noch späteren Zeitpunkt durch weitere Säurezugabe auf einen zweiten Wert eingestellt. Gemäß einer weiteren bevorzugten Ausführungsform wird der pH-Wert kontinuierlich über den gesamten Reaktionsverlauf oder über Teile des Reaktionsverlaufs verändert, beispielsweise durch eine elektronisch gesteuerte Dosierpumpe, die eine Säurelösung in die Reaktionslösung dosiert.

Die Anpassung des pH-Werts erfolgt über Zugabe von Säuren oder Puffersystemen. Bevorzugt werden organische Säuren mit einem pKs-Wert in einem Bereich von 3,5 bis 5,5 eingesetzt, beispielsweise Essigsäure, oder Puffersysteme, die auf solchen Säuren und ihren Salzen beruhen, beispielsweise ein Ameisensäure-Formiat-Puffer.

Die Anpassung des pH-Werts erfolgt dabei bevorzugt innerhalb eines Bereichs von pH 7 bis pH 2, insbesondere bevorzugt pH 6 bis pH 3.

Unabhängig vom Reaktionsverlauf der Kondensationsreaktion der Hülle kann eine Absenkung des pH-Wertes (auch auf geringere Werte wie z.B. pH 1) am Ende der Reaktion erfolgen, um durch eine Agglomeration der Partikel die Aufarbeitung (Filtrierung) zu erleichtern.

Neben dem pH-Wert ist die Temperatur der Reaktionslösung ein wichtiger Steuerparameter sowohl für die Kondensationsreaktion des Hüllmaterials, als auch für das Entfernen des organischen Lösemittels. Gemäß einer bevorzugten Ausführungsform wird die Temperatur stufenweise erhöht, z.B. von Raumtemperatur nach einer gewissen Reaktionszeit auf 40°C und dann nach einer gewissen weiteren Reaktionszeit von 40°C auf 80°C. Gemäß einer weiteren bevorzugten Ausführungsform wird die Temperatur über die gesamte Reaktionszeit oder über Teile der Reaktionszeit kontinuierlich verändert.

Gemäß einer bevorzugten Ausführungsform wird die Temperatur zum Entfernen des organischen Lösemittels nahe am Siedepunkt des organischen Lösungsmittels gehalten. Bevorzugt ist die Haltetemperatur dabei nicht weniger als 10°C vom Siedepunkt des Lösemittels entfernt, besonders bevorzugt nicht weniger als 5°C. Bevorzugt befindet sich die Haltetemperatur jedoch nicht am oder über dem Siedepunkt des organischen Lösemittels, da hierdurch die Integrität der Hülle vermindert werden kann.

Gemäß einer bevorzugten Ausführungsform wird anstelle oder zusätzlich zur Erhöhung der Temperatur ein Unterdruck angelegt, um das Entfernen des organischen Lösemittels zu erreichen.

Gemäß einer bevorzugten Ausführungsform erfolgt das Entfernen des organischen Lösungsmittels ohne Anlegen von Unterdruck und ohne zusätzliche Temperaturerhöhung durch Rühren bei Raumtemperatur über einen gewissen Zeitraum.

Das Aushärten des Hüllmaterials findet bevorzugt im Temperaturbereich von 50°C bis 100°C statt, insbesondere bevorzugt im Temperaturbereich von 70 bis 80°C.

Bevorzugt findet die Entfernung des Lösemittels über einem Zeitraum von mindestens 20 Minuten statt, wobei der Zeitraum insbesondere bevorzugt mindestens 1h beträgt. Bevorzugt findet das Aushärten des Hüllmaterials bevorzugt über einem Zeitraum von mindestens 30 Minuten statt, wobei der Zeitraum insbesondere bevorzugt mindestens 1h beträgt.

Die Größe der resultierenden Kapsel-Lumineszenzpigmente beträgt dabei bevorzugt 0,1µm bis 20 µm, weiter bevorzugt 0,5µm bis 5 µm, insbesondere bevorzugt 1 µm bis 3µm.

Bevorzugt beträgt der Masseanteil der Hülle mehr als 20% der Masse des Kernmaterials, weiter bevorzugt mehr als 50% der Masse des Kernmaterials, insbesondere bevorzugt mehr als 100% der Masse des Kernmaterials.

Der Anteil des Lumineszenzstoffes am Kernmaterial beträgt bevorzugt zwischen 0,01 bis 30 Gewichtsprozent, weiter bevorzugt zwischen 0,1 bis 20 Gewichtsprozent, insbesondere bevorzugt zwischen 1 und 15 Gewichtsprozent.

### Variante 2: Kapsel-Lumineszenzpigmente mit einem Kern aus Duromeren und einer Kondensationspolymer-Hülle

Diese Variante beinhaltet eine vorteilhafte Weiterentwicklung der aus der Druckschrift US 5795379 A bekannten Methode der Einbringung von Lumineszenzstoffen in ein festes Harz. Das Verfahren beinhaltet einen weiteren Veredelungsschritt, um die das Lumineszenzpigment enthaltende Druckfarbe (bzw. das Wertdokument) durch Erhöhung der Lösemittelstabilität der Lumineszenzpigmente gegen die sonst typische Migration bzw. das sogenannte "Ausbluten" zu schützen. In diesem Schritt wird um das (z.B. einen oder mehrere Lumineszenzstoffe enthaltende und auf die gewünschte Korngröße vermahlene) Duromer-Harz eine Schutzhülle aus einem Kondensationspolymer aufgebracht, so dass Kapsel-Lumineszenzpigmente entstehen.

Bei dem Duromer-Kern handelt es sich dabei bevorzugt um ein Additionspolymer, insbesondere um Polyurethan oder Polyharnstoff.

Während Polyurethane/Polyharnstoffe in einer Reaktionsextrusion ohne spezielle trockene Reaktionsbedingungen (Schutzgas, Vakuum, chemische Zusätze, etc.) immer eine gewisse Porosität aufweisen (siehe die US 3755222), läuft die Kondensation von Melamin-Formaldehydharzen ("MF-Harze") oder anderen Polykondensationspolymeren ohne gasinduzierte Porenbildung ab, da keines der Monomere durch Kontakt mit Wasser Kohlendioxid freisetzt. Andererseits bringt der direkte Einsatz von MF-Harzen als Kernmaterial bzw. als die Lumineszenzstoffe tragendes Polymer andere technische Nachteile hinsichtlich Vermahlbarkeit, Aufnahmefähigkeit und Prozessierbarkeit mit sich.

Die vorliegende Variante kombiniert daher die Vorteile der einfachen und gut skalierbaren Produktion von Polyadditionsharz-basierten Lumineszenzpigmenten mit den chemikalienbeständigen Eigenschaften von Melamin-Formaldehydharzen, indem auf einen mit Lumineszenzstoffen beladenen Polyadditionsharz-Kern eine Schutzhülle aus Melamin-Formaldehyd-Harz aufkondensiert wird.

Dieser Prozessschritt ermöglicht es, lösliche oder instabile Lumineszenzstoffe gegen äußere Einflüsse, wie Säure- oder Basekontakt, Kontakt mit organischen Lösemitteln, extreme klimatische Bedingungen oder Kontakt mit reduzierenden oder oxidierenden Substanzen, zu schützen.

Gemäß einer bevorzugten Ausführung wird in einem ersten Schritt der zu schützende Lumineszenzstoff gemäß der Druckschrift US 5795379 A in eine Duromermatrix eingebracht. Hierfür können die Lumineszenzstoffe gemeinsam mit den Rohstoffen des verwendeten Harz-Typs (zum Beispiel einem Polyurethanharz oder Polyharnstoffharz) extrudiert oder verknetet werden. Die bevorzugte Konzentration der Lumineszenzstoffe in der Mischung liegt in einem Bereich von 0,1% bis 25%, insbesondere bevorzugt in einem Bereich von 3% bis 20% (Gewichtsprozent). Nach Beendigung des Extrusions- oder Knetprozesses werden die erhaltenen, die Lumineszenzstoffe enthaltenden Harze zu Harzpulver vermahlen, wobei die Korngröße gemäß der gewünschten Druckanwendung gewählt wird.

Gemäß einer bevorzugten Ausführung wird für die Erzeugung der mit Lumineszenzstoff versetzten Kern-Polymerpartikel eine Mischung aus einem trimeren Isocyanatmonomer, bevorzugt dem Isocyanurat-Trimer von Isophorondiisocyanat, und verschiedenen Mono-, Di- oder Triaminen in einem Industriekneter auf 150°C bis 250°C, bevorzugt 180°C, erhitzt und dabei bis zum Erhärten geknetet.

Gemäß einer weiteren bevorzugten Ausführungsform wird für die Erzeugung der mit Lumineszenzstoff versetzten Kern-Polymerpartikel eine Mischung aus einem trimeren Isocyanatmonomer, bevorzugt dem Isocyanurat-Trimer von Isophorondiisocyanat, und verschiedenen Mono-, Di- und Triaminen mit einem ansteigenden Temperaturprofil in einem Schnecken-Extruder bei Temperaturen in einem Bereich von 5°C bis 250°C extrudiert. Alternativ können als Kernmaterial beliebige andere dreidimensional vernetzte Isocyanat-basierte Duromere verwendet werden, zum Beispiel Polyurethan-Harze.

Nach Beendigung des Extrusionsprozesses oder Knetprozesses werden die erhaltenen, die Lumineszenzstoffe enthaltenden spröden Harzpulver auf die der gewünschten Anwendung entsprechende Korngröße zermahlen.

Aus diesem ersten kostengünstigen und gut skalierbaren Extrusions- bzw. Verknetungsschritt erhält man ein verdruckbares Pulver in der passenden Korngröße. Diese Pigmente besitzen jedoch noch eine poröse bzw. zugängliche Oberfläche, welche den enthaltenen organischen Lumineszenzstoff gegenüber äußeren Einflüssen wie Säure- oder Basekontakt, Kontakt mit organischen Lösemitteln, extreme klimatische Bedingungen (wie zum Beispiel warme, feuchte Luft) oder Kontakt mit reduzierenden oder oxidierenden Substanzen angreifbar macht. Die poröse Oberfläche ist das zwangsläufige Resultat aus der Reaktion von Wasser aus der Luft mit den Isocyanatgruppen der Monomere unter den Bedingungen der erwünschten Polyadditionsreaktion (Wärme), bei welcher gasförmiges Kohlendioxid entsteht.

Gegenstand der Variante ist u.a. die Einführung eines Beschichtungsschrittes, welcher diesen Nachteil behebt. In diesem zweiten Schritt werden die im ersten Schritt erhaltenen Additionspolymer-Pigmente mit einer schützenden Polymerschicht umhüllt. Bevorzugt handelt es sich bei der schützenden Polymerschicht um ein Polykondensationspolymer. Weiter bevorzugt enthält das Polykondensationspolymer der Hülle mindestens ein gleiches Monomer wie das Polyadditionspolymer des Kernmaterials, um ein direktes Aufwachsen der Hüllschicht auf das Kernmaterial zu begünstigen. Insbesondere bevorzugt handelt es sich bei diesem Monomer um Melamin. Die hohe Funktionalität (drei vernetzende Gruppen pro Molekül) von Melamin begünstigt ein gutes Aufwachsen und dichtes Abschließen der Hüllschicht.

Gemäß einer bevorzugten Ausführungsform werden die zu beschichtenden Pigmente in einer Konzentration in einem Bereich von 5g/l bis 50 g/l und ein Melamin-Formaldehyd-Präpolymer in einer Konzentration in einem Bereich von 50 g/l bis 250 g/l mit einem Homogenisator bei Temperaturen in einem Bereich von 60°C bis 80°C bei einem pH-Wert in einem Bereich von 3,5 bis 6 für eine Zeitdauer in einem Bereich von einer bis vier Stunden gerührt und dadurch mit einer Schutzhülle ummantelt. Wählt man den pH-Wert zu niedrig, begünstigt man die Bildung von Kondensationskeimen in der Reaktionslösung, welche im Anschluss die Bildung von Kondensationspolymerpartikeln neben den zu beschichtenden Sicherheitspigmenten begünstigen. Wählt man den pH-Wert zu hoch, wird die Kondensationsreaktion unnötig verlangsamt, da die Reaktivität vom Melamin gegenüber Formaldehyd im basischen Medium stark abnimmt (siehe D. Braun, W. Krausse, Angew. Makromol. Chem. 118 (1983) 165).

Für die Prozedur der Beschichtung ist es unerheblich, welcher Lumineszenzstoff in das Polyadditionspolymer des Kernmaterials eingearbeitet wurde, da die bestimmenden Oberflächeneigenschaften (z.B. Ladung, chemische Bindungsstellen etc.) maßgeblich durch die Duromer-Matrix des Kerns bestimmt werden. Somit wird hierin eine universelle Methode zur Verkapselung von Lumineszenzstoffen beschrieben.

Gemäß weiteren bevorzugten Ausführungsformen können auch andere Kondensationspolymere zur Beschichtung verwendet werden, wie zum Beispiel Melamin-Phenol-Formaldehyd-Harze, Phenol-Formaldehydharze sowie verwandte Harz-Typen wie Melamin-Guanidin-Formaldehydharze oder Phenol-Resorzin-Formaldehydharze.

### Variante 3: Kapsel-Lumineszenzpigmente mit mehreren Kernen aus Thermoplasten und einer Additionspolymer-Hülle

Die vorliegende Variante 3 beinhaltet eine vorteilhafte Weiterentwicklung der aus der Druckschrift US 5795379 A bekannten Methode der Einbringung von Lumineszenzstoffen in ein festes Harz. Im vorliegenden Prozess werden die Lumineszenzstoffe nicht direkt mit den Komponenten des Harzes extrudiert, sondern in einem vorgelagerten Schritt in Kügelchen (oder Partikeln) aus thermoplastischem Polymer gelöst. Die Konzentration des im Polymer gelösten Lumineszenzstoffes liegt dabei vorzugsweise in einem Bereich von 0,01% bis 30%. Durch diesen vorgelagerten Prozess-Schritt ist es verglichen mit einem direkt in ein Harz extrudierten organischen Lumineszenzstoff möglich, die gleiche Helligkeit des Endprodukts mit einer wesentlich geringeren Menge, z.B. 10% bis 60%, an Lumineszenzstoff zu erreichen.

Durch die geringere Stoffmenge wird hier eine Kostenersparnis erzielt.

In der vorliegenden Variante handelt es sich ausdrücklich nicht um Kern-Hülle-Teilchen mit definierter einheitlicher Geometrie, insbesondere nicht um Kern-Hülle-Teilchen mit einem Kern und einer Hülle, sondern um Kapsel-Lumineszenzpigmente mit nichteinheitlicher Geometrie mit mehreren Kernen und einer Hülle.

Ein weiterer Vorteil dieser Variante liegt in der Stabilisierung der im thermoplastischen Polymer gelösten organischen Lumineszenzstoffe gegenüber wässrigen Säuren und Basen. Eine einheitliche Umhüllung des thermoplastischen Polymers mit dem umhüllenden, kondensierten Harz ist hierfür nicht ausschlaggebend. Das den Lumineszenzstoff enthaltende Polymer (zum Beispiel PMMA oder PS) wirkt infolge seiner schlechten Benetzbarkeit mit wässrigen Lösungen als eine Barriere gegenüber wässrigen Säuren und Basen und verhindert so den Kontakt zwischen den gelösten, labilen Lumineszenzstoffen und den Säuren und Basen.

Die Einbettung der stabilen Polymerkugeln in ein Harz ermöglicht weiterhin das einfache Einstellen der für den jeweiligen Druckprozess vorteilhaften Pigment-Korngröße mittels Zermahlen, was eine einfache und kostengünstige Skalierbarkeit des Produktionsprozesses zur Folge hat.

Das Herstellungsverfahren ist zweistufig. Im ersten Herstellungsschritt wird der organische Lumineszenzstoff in einem thermoplastischen Polymer gelöst. Hierfür wird das Polymer (zum Beispiel PMMA oder PS) gemeinsam mit dem Lumineszenzstoff in einem geeigneten organischen Lösemittel (zum Beispiel Dichlormethan) gelöst. Um das Polymer mit dem gelösten Lumineszenzstoff wieder in eine feste Form zu überführen, kann man verschiedene Synthesepfade wählen. Bevorzugt wird die Polymer-Lösung mithilfe eines Tensids (zum Beispiel Natrium-Dodecylsulfat) in Wasser dispergiert und das Lösemittel durch einfache Verdunstung aus der Mischung entfernt. Eine weitere Möglichkeit ist das Ausfällen des Polymers (inklusive des gelösten Lumineszenzstoffes) in Diethylether mit anschließendem (insbesondere unter Kühlung vorgenommenem) Vermahlen auf die gewünschte Korngröße. Die bevorzugte Korngröße der thermoplastischen Polymerpartikel beträgt weniger als 7 µm, besonders bevorzugt weniger als 3 µm.

Die Thermoplast-Kerne bestehen aus thermoplastischen Polymeren, bevorzugt aus einem thermoplastischen, unvernetzten Polymer. Gemäß einer bevorzugten Ausführungsform besteht das Polymer des Kernmaterials aus polymerisierten Ethylenderivaten, weiter bevorzugt aus Polystyrol (PS) oder Polyacrylaten, darunter bevorzugt aus Polymethylmethacrylat (PMMA), Polyvinylacetat (PVAC), Polyvinylchlorid (PVC) oder Polyacrylnitril (PAN) oder aus einem eines oder mehrere der vorgenannten Polymere enthaltenden Kopolymer, z.B. Acrylnitril-Butadien-Styrol-Kopolymer (ABS). Gemäß einer weiteren bevorzugten Ausführungsform handelt es sich bei den Ethylenderivaten um Polyethylen (PE), Polypropylen (PP) oder andere, aus aliphatischen Kohlenstoffketten aufgebaute Polymere. Gemäß einer weiteren bevorzugten Ausführungsform besteht das Polymer des Kernmaterials aus Polycarbonaten (PC), Polyamiden (PA) oder Polyestern, z.B. Polyethylenterephthalat (PET).

Die Kettenlängen der Polymere des Kernmaterials liegen dabei bevorzugt in einem Bereich von 1000 bis 1 000 000 g/mol, besonders bevorzugt in einem Bereich von 50 000 bis 250 000 g/mol.

Nach Beendigung des ersten Syntheseschritts werden die gemäß der obigen Beschreibung hergestellten Polymerpartikel im zweiten Herstellungsschritt in eine Duromermatrix eingebracht. Hierfür können die Polymerpartikel gemeinsam mit den Rohstoffen des verwendeten Harz-Typs (zum Beispiel Polyurethanharz) extrudiert oder verknetet werden. Die bevorzugte Konzentration der Polymerpartikel in der Mischung liegt in einem Bereich von 0,1% bis 25%, insbesondere bevorzugt in einem Bereich von 3% bis 20% (d.h. Gewichtsprozent). Nach Beendigung des Extrusions- oder Knetprozesses wird das erhaltene, die Polymerpartikel enthaltende Harz zu einem Harzpulver zermahlen, wobei die Korngröße hinsichtlich des gewünschten Druckprozesses eingestellt werden kann.

Gemäß einer bevorzugten Ausführung werden für das Erzeugen der mit den Thermoplast-Kernen versetzten Duromer-Matrix Additionspolymere verwendet. Dabei wird bevorzugt eine Mischung eines trimeren Isocyanatmonomers, bevorzugt das Isocyanurat-Trimer von Isophorondiisocyanat, und verschiedenen Mono-, Di- oder Triaminen in einem Industriekneter auf 150°C bis 250°C, bevorzugt 180°C, erhitzt und dabei bis zum Erhärten geknetet.

Gemäß einer weiteren bevorzugten Ausführungsform wird für das Erzeugen der mit den Thermoplast-Kernen versetzten Duromer-Matrix eine Mischung eines trimeren Isocyanatmonomers, bevorzugt das Isocyanurat-Trimer von Isophorondiisocyanat, und verschiedenen Mono-, Di- oder Triaminen mit einem ansteigenden Temperaturprofil in einem Schnecken-Extruder bei Temperaturen in einem Bereich von 5°C bis 250°C extrudiert.

Nach Beendigung des Extrusionsprozesses oder Knetprozesses wird das erhaltene, die Lumineszenzstoffe enthaltende Harzpulver auf die der jeweiligen Anwendung entsprechende Korngröße zermahlen.

Gemäß einer bevorzugten Ausführungsform werden den thermoplastischen Polymerpartikeln sogenannte Weichmacher zugesetzt, beispielsweise Diethylhexyladipat, Dibutylphthalat oder Diisononylphthalat. Als Stoffklassen können hier Di-ester der Phthalsäure, Di-ester der Adipinsäure und Di-ester der Sebacinsäure mit längerkettigen Monoalkoholen (2-Ethylhexanol, Isononanol, Decylalkohol, Fettalkohole, Benzylalkohol, Glykolether), Tri-ester der Zitronensäure, Phosphorsäureester längerkettiger aliphatischer Alkohole, Dibenzoesäureester von aliphatischen Alkoholen, Ester von Fettsäuren mit aliphatischen Alkoholen, Di-ester von Polyethylenglykolethern, Ester von Harzsäuren mit längerkettigen aliphatischen Alkoholen, Weichmacher auf Basis epoxidierter Fettsäureester oder epoxidierter Öle, Kohlenstoffweichmacher und chlorierte Paraffine eingesetzt werden. Hierdurch können die mechanischen Eigenschaften des Polymers angepasst werden. Insbesondere kann die Aufnahmefähigkeit des Kernmaterials für bestimmte Lumineszenzstoffe erhöht werden.

Bevorzugt werden relativ zur Masse des Kernmaterials 0,1 bis 5 Gewichtsprozent Weichmacher zugesetzt, weiter bevorzugt 0,2 bis 2%, insbesondere bevorzugt 0,3 bis 0,6%.

Gemäß einer besonders bevorzugten Ausführung bestehen die Thermoplast-Kerne aus Polymethylmethacrylat (PMMA) oder Polystyrol (PS) und die Duromer-Matrix aus einem Isocyanat-basierten Additionspolymer, wobei es sich bei dem Additionspolymer um Polyurethan oder Polyharnstoff handelt.

Neben den genannten bevorzugten Varianten (Varianten 1 bis 3) sind theoretisch noch weitere Varianten an Kapsel-Lumineszenzpigmenten denkbar, welche sich in Art und Sorte der verwendeten Polymere für Kern und Hülle sowie in der Art der Herstellung unterscheiden.

Unabhängig von der Variante, welche für die Herstellung der jeweiligen Kapsel-Lumineszenzpigmente gewählt wurde, wird im Folgenden manchmal von verschiedenen Kapsel-Lumineszenzpigmenten gesprochen. Zwei Kapsel-Lumineszenzpigmente gelten auch dann als verschieden, wenn sich nur die jeweiligen Lumineszenzstoffe bzw. die Lumineszenzstoff-Kombinationen im Kern der Pigmente unterscheiden. Beispiel: Rot lumineszierende Kapsel-Lumineszenzpigmente nach Variante 1 mit einem ersten Lumineszenzstoff und grün lumineszierende Kapsel-Lumineszenzpigmente nach Variante 1 mit einem zweiten Lumineszenzstoff sind zwei verschiedene Kapsel-Lumineszenzpigmente, obwohl sie jeweils analog nach Variante 1 hergestellt wurden.

Weiterhin wird die Formulierung "Lumineszenzfarbsystem" benutzt. Bei einem erfindungsgemäßen Lumineszenzfarbsystem handelt es sich um eine Mehrzahl von speziellen Lumineszenzpigmenten, den Kapsel-Lumineszenzpigmenten, die jeweils unterschiedliche Farbeindrücke der Lumineszenzemission aufweisen. Durch eine Mischung der Kapsel-Lumineszenzpigmente lässt sich innerhalb des Farbsystems ein beliebiger Farbeindruck der Lumineszenz einstellen.

Wie bereits erwähnt, gewinnt man durch Verwendung von Lumineszenzfarbsystemen, welche auf Kapsel-Lumineszenzpigmenten basieren, eine Reihe an Vorteilen gegenüber dem Stand der Technik.

Durch ihre gleichartige Größe und Oberflächenbeschaffenheit wird als weiterer Vorteil eine Anpassung der Druckeigenschaften zwischen den einzelnen Kapsel-Lumineszenzpigmenten erreicht. Eine Anpassung der Lichtechtheit der Kapsel-Lumineszenzpigmente kann durch geeignete Wahl der Lumineszenzstoffe bzw. durch gezielte Mischung von Lumineszenzstoffen unterschiedlicher Stabilität erreicht werden, welche im Kern der Kapsel-Lumineszenzpigmente verteilt sind.

Die Kapsel-Lumineszenzpigmente weisen weiterhin zahlreiche Applikationsvorteile auf. Z.B. besitzen alle unterschiedlichen, daraus hergestellten Farben die gleichen Druckeigenschaften, d.h. es erfolgt z.B. keine Entmischung der unterschiedlichen Kapsel-Lumineszenzpigmente in der Druckfarbe, kein unterschiedliches Verhalten der Druckfarben auf der Druckmaschine, und es wird nur ein einziges Farb-Formulierungssystem für alle erstellbaren Lumineszenzfarbtöne benötigt.

Die erfindungsgemäßen Kapsel-Lumineszenzpigmente erzeugen farbige (VIS-)Emissionen bei UV-Bestrahlung, besitzen jedoch bevorzugt keine (absorptionsbasierte) Eigenfarbe bzw. nur eine schwache Eigenfarbe, sodass ein Aufdruck unter Normalbedingungen bei Raumlicht auf dem Wertdokument nicht erkennbar ist.

Um die Nachteile des Stands der Technik zu beheben, wurde ein Lumineszenzfarbsystem entwickelt, welches aus mindestens zwei, bevorzugt mindestens drei Kapsel-Lumineszenzpigmenten besteht, die
- die gleiche Größe,
- gleiche Oberflächenchemie und ein
- ähnliches spezifisches Gewicht besitzen; (Hierdurch wird das Applikationsproblem gelöst, d.h. die Durchgängigkeit in der Herstellung und im Druck der Farben. Bedingt durch die Auswahl und den Mengenanteil der Lumineszenzstoffe kann sich dabei das spezifische Gewicht verschiedener Kapsel-Lumineszenzpigmente um bis zu 20% unterscheiden, ohne die Farbeinbringung zu beeinträchtigen.);
- eine gleichartige chemische Stabilität besitzen (hierdurch wird das Problem des unterschiedlichen Verhaltens der Lumineszenzstoffe des Stands der Technik bei Lösungsmittelkontakt gelöst);
- eine gleichartige Lichtechtheit besitzen (hierdurch wird das Problem des unterschiedlichen Verhaltens der Lumineszenzstoffe des Stands der Technik bei Sonnenlicht und UV-Bestrahlung gelöst);
- miteinander frei mischbar sind (hierdurch können beliebige Mischfarben des Lumineszenzfarbsystems gebildet werden).

Die erfindungsgemäße technische Lösung basiert insbesondere darauf, dass
- die Lumineszenzstoffe in eine Polymermatrix (Kern) eingebettet werden, wodurch sich einerseits ihre relative Lumineszenz erhöht (geringeres Konzentrations-Quenching gegenüber konzentriertem Lumineszenzstoff) und andererseits ein erster Schutz gegen chemische Angriffe erfolgt;
- der Kern mit einer zusätzlichen Hülle aus einem zweiten, unterschiedlichen Polymer versehen wird, wodurch einerseits bevorzugt ein komplementärer Schutz gegen chemische Angriffe erfolgt (die Hülle ist stabil gegenüber Stoffen, die den Kern angreifen könnten, der Kern ist stabil gegenüber Stoffen, die die Hülle angreifen könnten) und andererseits die Kompatibilität bzw. die freie Mischbarkeit aller Pigmente sichergestellt wird (gleiche Oberfläche);
- bevorzugt alle Pigmente die gleiche (bzw. ähnliche) Korngröße (bzw. Korngrößenverteilung) besitzen.

Das erfindungsgemäße Lumineszenzfarbsystem basiert bevorzugt auf einem RGB-System, weil auf diese Weise ein größerer Farbraum abgedeckt werden kann und insbesondere durch additive Farbmischung ein weißer Farbeindruck erzeugt werden kann. Ein RGB-System eignet sich daher besonders für Echtfarbendarstellungen oder andere, komplexere Druckbilder.

Gemäß einer bevorzugten Ausführungsform existieren daher mindestens drei unterschiedliche Kapsel-Lumineszenzpigmente, deren Emission jeweils den Grundfarben Rot, Grün und Blau entsprechen. In bestimmten Fällen kann es vorteilhaft sein, zusätzlich zu diesen drei Pigmenten oder anstelle des rot lumineszierenden Pigments ein gelb lumineszierendes Pigment zu verwenden, wodurch ein alternatives Dreifarbsystem (Gelb, Grün, Blau) bzw. ein erweitertes Vierfarbsystem (Rot, Gelb, Grün, Blau) entsteht. Die Ursache hierfür ist die hohe technische Schwierigkeit, lichtstabile rote Emissionsfarben ohne starke Eigenfärbung herzustellen. Der Ersatz der rot lumineszierenden Pigmente z.B. in gelb lumineszierenden Mischfarben kann daher vorteilhaft sein. Ebenso kann je nach den benötigten Lichtstabilitäten und dem Druckbild auch der Ersatz einer anderen Farbe vorteilhaft sein.

Gemäß einer weiteren bevorzugten Ausführungsform werden daher drei unterschiedlich lumineszierende Kapsel-Lumineszenzpigmente oder mindestens vier unterschiedlich lumineszierende Kapsel-Lumineszenzpigmente eingesetzt, welche nicht notwendigerweise den Grundfarben Rot, Grün und Blau entsprechen.

In bestimmten Fällen ist jedoch ein reduziertes Lumineszenzfarbsystem wünschenswert, beispielsweise wenn auf einem Wertdokument nur rot und grün lumineszierende Bereiche vorkommen bzw. davon abgeleitete Mischfarben wie z.B. Gelbtöne. In diesem Fall ist ein Zweifarbensystem aus Rot und Grün ausreichend und technisch weniger aufwändig bzw. leichter applizierbar.

Gemäß einer weiteren bevorzugten Ausführungsform werden daher zwei unterschiedlich lumineszierende Kapsel-Lumineszenzpigmente eingesetzt. Insbesondere werden dabei die Kombinationen der Kapsel-Lumineszenzpigmente mit den Emissionsfarben Rot mit Grün, Rot mit Blau, Grün mit Blau, Gelb mit Blau, Gelb mit Grün, und Gelb mit Rot bevorzugt.

Auch ein einzelnes erfindungsgemäßes Kapsel-Lumineszenzpigment weist wie beschrieben bereits Vorteile gegenüber dem Stand der Technik auf, da es durch seine hohe Lumineszenzintensität und seine hohe chemische Stabilität die gleichzeitige Beladung der Druckfarbe mit weiteren Feststoffen, z.B. maschinenlesbaren Merkmalsstoffen ermöglicht.

Gemäß einer weiteren bevorzugten Ausführungsform wird daher nur ein einziges Kapsel-Lumineszenzpigment eingesetzt, bevorzugt in Kombination mit einem maschinenlesbaren Merkmalsstoff.

Gemäß einer bevorzugten Ausführungsform bilden die Kapsel-Lumineszenzpigmente an mindestens einer Stelle des Wertdokuments in ihrer Mischung einen weißen Farbeindruck der Emission, beispielsweise durch die Kombination aus rot, grün und blau lumineszierenden Kapsel-Lumineszenzpigmenten.

Bilden mehrere Kapsel-Lumineszenzpigmente eine Mischung, oder sind mehrere Kapsel-Lumineszenzpigmente an unterschiedlichen Stellen des gleichen Wertdokumentes aufgedruckt, müssen sie ein vergleichbares Stabilitätsverhalten zeigen, um zu verhindern, dass sich der Farbton verändert bzw. das Druckbild uneinheitlich wird. Beispielsweise würde sich bei einer aufgedruckten weiß-roten Flagge durch Herauslösen des rot lumineszierenden Lumineszenzstoffes der weiß lumineszierende Teil der Flagge Türkis verfärben und der rot lumineszierende Teil verblassen bzw. verschwinden.

Um eine Veränderung des Lumineszenzfarbeindrucks durch die Migration eines Lumineszenzstoffes, durch die Zerstörung eines Lumineszenzstoffes durch Säuren oder Basen oder durch das Herauslösen eines Lumineszenzstoffes durch organische Lösungsmittel zu verhindern, müssen die verwendeten Lumineszenzpigmente eine außerordentlich hohe Chemikalienstabilität aufweisen. Erfindungsgemäß werden dafür bevorzugt spezielle Kapsel-Lumineszenzpigmente verwendet.

Bevorzugt unterscheiden sich die unterschiedlichen Kapsel-Lumineszenzpigmente nur bezüglich Beladungsmenge und Art des Lumineszenzstoffes im Kern und sind ansonsten bezüglich Hüllmaterial und Kernmaterial weitestgehend identisch. Dadurch wird die gemeinsame Verdruckbarkeit der Kapsel-Lumineszenzpigmente erleichtert und es ergeben sich technische Vorteile für das Lumineszenzfarbsystem, z.B. muss nur eine Lackformulierung für mehrere unterschiedliche Druckfarben auf Lager gehalten werden. Weitere Applikationsvorteile sind z.B. die höhere Lagerstabilität der Druckfarbe, da keine Entmischung aufgrund unterschiedlicher physikalischer Eigenschaften der Kapsel-Lumineszenzpigmente auftritt, sowie ein identisches Verhalten der unterschiedlichen Kapsel-Lumineszenzpigmente in der Druckmaschine bzw. bei dem Verdrucken.

Im Gegensatz dazu müssen bei klassischen Lumineszenzpigmenten die Formulierungen der Druckfarben jeweils an die darin enthaltenen Lumineszenzpigmente angepasst werden, es sind also die Bereitstellung und Lagerung einer Vielzahl an unterschiedlichen Formulierungen und Formulierungskomponenten notwendig. Ebenso ist die Kombination von Lumineszenzpigmenten mit inkompatiblen Eigenschaften bei klassischen Lumineszenzpigmenten des Standes der Technik oft problematisch.

Aufgrund der Gleichartigkeit der erfindungsgemäßen Kapsel-Lumineszenzpigmente können diese vor dem Einbringen in eine Farbe als Pulver beliebig miteinander gemischt werden, um einen bestimmten Lumineszenz-Farbton einzustellen, oder es können unterschiedliche, bereits hergestellte Farben beliebig miteinander gemischt werden, um einen bestimmten Lumineszenz-Farbton einzustellen.

Weiterhin wird mit dem Kern-Hülle-Aufbau erreicht, dass die Chemikalienstabilität der Kapsel-Lumineszenzpigmente unabhängig von der Chemikalienstabilität der gewählten Lumineszenzstoffe ist. Führt man einen qualitativen Stabilitätstest von Druckmustern aus, wird oft eine Einteilung in die folgenden Stufen durchgeführt:
4: keine sichtbare Änderung
3: geringfügige Änderung
2: deutliche Änderung, weniger als 50% beschädigt
1: starke Änderung, mehr als 50% beschädigt
0: Element zerstört

Qualitativ erfolgt die Bewertung der Stabilität anhand der oben genannten Stufen 0-4 durch Betrachtung des angeregten Andrucks mit dem Auge. Quantitativ erfolgt die Bewertung durch Vermessung des Emissionsspektrums mit Hilfe eines Fluoreszenzspektrometers.

Erfahrungsgemäß besitzen Andrucke mit der Stufe 4 ("keine sichtbare Änderung") eine nach dem Test verbleibende Lumineszenzintensität von über 80% bezogen auf die ursprüngliche Lumineszenzintensität. Dies wird im Folgenden als eine Stabilität von über 80% bezeichnet.

Um die Stabilität der Kapsel-Lumineszenzpigmente qualitativ und quantitativ beurteilen zu können, wird im Folgenden ein applikationsnahes Testverfahren beschrieben.

Dabei wird die Bestimmung der Stabilität der Kapsel-Lumineszenzpigmente in einem Offset-Drucklack vorgenommen, da hier, unter anderem aufgrund der geringeren Andruckstärken und der damit verbundenen höheren Pigmentierung, deutlich präzisere quantitative Aussagen über die Stabilität der Pigmente getroffen werden können als in entsprechenden Stichtiefdruckfarben. Die entsprechenden Ergebnisse lassen sich jedoch problemlos auf Stahlstichtiefdruckfarben übertragen. Lumineszenzpigmente, welche in Offset-Andrucken zu einem deutlichen Intensitätsverlust führen, sind auch für den Stichtiefdruck ungeeignet und führen hier ebenfalls zu einem Intensitätsverlust bzw. zu einem "Verschmieren" oder "Auslaufen" des Lumineszenzeindrucks.

Testverfahren A5 bzw. A30:
- Einbringen der Kapsel-Lumineszenzpigmente in einen Offset-Lack mit einer Pigmentierung von 15 Gewichtsprozent mit einem Dreiwalzenstuhl
- Andrucken der so erhaltenen Druckfarbe im Offsetdruck mit einem Andruckgewicht von 2 g/m² auf Werttitelpapier ("Banknotenpapier")
- Trocknen des Andrucks bei 60°C für 12h
- Eintauchen des Andrucks (bzw. eines abgeschnittenen Teils des Andrucks) in die jeweilige Testsubstanz, gegen welche die Stabilität des Andrucks ermittelt werden soll für einen Zeitraum von 5 Minuten (A5) bzw. 30 Minuten (A30)
- Entfernen des Andrucks aus der Testsubstanz und Abwaschen von anhaftender Testsubstanz mit Wasser
- Trocknen des Andrucks bei 60°C für 2h
- Die quantitative Stabilität des Andrucks gegen die Testsubstanz ergibt sich aus dem Vergleich der Intensität der Lumineszenzemission des Andrucks vor und nach Behandlung mit der Testsubstanz (bzw. dem Vergleich eines unbehandelten Teils des Andrucks mit einem behandelten Teil des gleichen Andrucks); Stabilität = (Intensität nach Behandlung mit Lösemittel) / (Intensität vor Behandlung mit Lösemittel)

Die Lumineszenzstoffe enthaltenden Kapsel-Lumineszenzpigmente der vorliegenden Erfindung erreichen in Andrucken dabei für applikationsrelevante Lösemittel, Säuren und Basen die höchste Stufe 4 oder eine Stabilität >80%, selbst wenn Andrucke des gleichen ungeschützten Lumineszenzstoffes nur die unterste Stufe 0 erreichen.

Gemäß einer bevorzugten Ausführungsform liegt die höchste Stabilitätsstufe "keine sichtbare Änderung" oder eine Stabilität >80%, bevorzugt >90% bei den folgenden applikationsrelevanten Lösungsmitteltests gemäß Testverfahren A5, besonders bevorzugt gemäß Testverfahren A30 vor:
Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor). Dabei beträgt die Einwirkungsdauer 5 bzw. bevorzugt 30 Minuten, um sicherzustellen, dass ein ausreichender langer Kontakt zwischen Lumineszenzpigment und Testsubstanz zu Stande kommt.

Gemäß einer weiteren bevorzugten Ausführungsform werden die genannten Stabilitäten von den Kapsel-Lumineszenzpigmenten für folgende applikationsrelevante Lösungsmittel erfüllt
- Ethanol
- Trichlorethylen
- Tetrachlorethylen
- Xylol
- Leichtbenzin
- Natriumsulfit-Lösung (10 Gewichtsprozent)
- Schwefelsäure (2 Gewichtsprozent)
- Ammoniaklösung (10 Gewichtsprozent)

Generell ist zu beachten, dass die für den Test verwendete Druckfarbe bzw. das Substrat, auf dem aufgedruckt wird, selbst im Test stabil sein muss, dies ist für die im Sicherheitsdruck von Wertdokumenten verwendeten Druckfarben und Substrate generell erfüllt. Die Stabilität der Druckfarbe/ des Substrats lässt sich beispielsweise mit inerten Lumineszenzstoffen (z.B. anorganischen Phosphoren) prüfen.

Gemäß einer bevorzugten Ausführungsform sind die erfindungsgemäßen Kapsel-Lumineszenzpigmente selbst gegen besonders aggressive chemische Lösungsmittel für mindestens 5 Minuten stabil, z.B. Aceton. Insbesondere ist Aceton in der Lage, die meisten Lumineszenzfarbaufdrucke des Stands der Technik anzugreifen.

Bevorzugt zeigen die unterschiedlichen Kapsel-Lumineszenzpigmente bei maschineller quantitativer Bestimmung der Lumineszenzstärken vor und nach einer Exposition mit Chemikalien einen Intensitätsabfall der Lumineszenzintensität von weniger als 20%, bevorzugt weniger als 10%, insbesondere bevorzugt weniger als 5%.

Insbesondere beträgt der Unterschied zwischen den auf den Startwert normierten Lumineszenzintensitäten der Kapsel-Lumineszenzpigmente mit unterschiedlichen Lumineszenzemissionen untereinander weniger als 20 Prozentpunkte, bevorzugt weniger als 10 Prozentpunkte, insbesondere bevorzugt weniger als 5 Prozentpunkte. Das heißt, dass sich die unterschiedlichen Pigmente selbst beim Auftreten eines geringen Intensitätsverlustes durch Chemikalienexposition gleich verhalten und daher keine erkennbare Änderung der relativen Farbverhältnisse auftritt. Beispielsweise kann nach Chemikalienbehandlung eine erstes Kapsel-Lumineszenzpigment (z.B. rot) noch 96% seiner anfänglichen Intensität besitzen und ein zweites Kapsel-Lumineszenzpigment (z.B. grün) noch 95% seiner anfänglichen Intensität besitzen. Sie unterscheiden sich also nur um einen Prozentpunkt untereinander.

Dabei haben zwei Kapsel-Lumineszenzpigmente im Rahmen des Testverfahrens A5 bzw. A30 eine im Wesentlichen gleiche chemische Stabilität, wenn Teststreifen mit Andrucken von beiden Kapsel-Lumineszenzpigmenten alle gewählten Testlösungen (bevorzugt: Ethylacetat, Toluol, HCl 5%, NaOH 2%, Natriumhypochlorit 5% aktives Chlor) mit jeweils >80% verbleibender Lumineszenzintensität, bezogen auf die jeweilige Anfangsintensität, bestehen. Dabei wird für jede Testlösung ein neuer Teststreifen verwendet.

Gemäß einer bevorzugten Ausführungsform beträgt der im Rahmen der Stabilitätstests durch Behandlung mit Chemikalien verursachte Farbunterschied des Farbeindrucks der Lumineszenzemission relativ zum Farbeindruck der Lumineszenzemission vor Chemikalienbehandlung für Mischungen der erfindungsgemäßen Kapsel-Lumineszenzpigmente ΔD < 0,01, weiter bevorzugt ΔD < 0,005, insbesondere bevorzugt ΔD < 0,001.

Dabei bezeichnet ΔD den euklidischen Abstand der x,y-Koordinaten der Normfarbwerte der Lumineszenzemission auf der CIE-Normfarbtafel: ΔD = [(x₁-x₂)²+(y₁-y₂)²]^{0,5}.

Durch diese Gleichartigkeit der chemischen Stabilität der unterschiedlichen Kapsel-Lumineszenzpigmente wird erreicht, dass keine sichtbare Verschiebung der Farbtöne, z.B. durch Herauslösen einer einzelnen Lumineszenzfarbkomponente aus einem Gemisch, auftreten kann.

Um eine Veränderung des Lumineszenzfarbtons durch unterschiedliche Lichtechtheiten der Kapsel-Lumineszenzpigmente zu vermeiden, müssen die unterschiedlichen Kapsel-Lumineszenzpigmente über genügend hohe und genügend ähnliche Lichtechtheiten verfügen.

Die Lichtechtheit wird dabei über die zur Lichtechtheitsbestimmung von Absorptionsfarben übliche Europäische Blau-Wollskala bestimmt, z.B. analog zur Norm EN ISO 105-B01:1999, wobei jedoch statt des (absorptiven) Farbeindrucks die Intensität der Lumineszenzemission an den verschiedenen Punkten der Wollskala bestimmt wird. Ein Punkt der Wollskala gilt dabei als erreicht, wenn nach Behandlung noch mehr als 50% der ursprünglichen Lumineszenzintensität gemessen werden können.

Um die Lichtechtheit der Kapsel-Lumineszenzpigmente quantitativ beurteilen zu können, wird im Folgenden ein applikationsnahes Testverfahren beschrieben.

Auch hier wird für eine bessere quantitative Bestimmung der Stabilität ein Offset-Drucklack verwendet um einen dünnen homogenen Andruck zu erzeugen, da Unterschiede in der Schichtdicke des Andrucks auch zu Unterschieden in dessen Lichtstabilität führen.

### Testverfahren B:

- Einbringen der Kapsel-Lumineszenzpigmente in einen Offset-Lack mit einer Pigmentierung von 15 Gewichtsprozent mit einem Dreiwalzenstuhl
- Andrucken der so erhaltenen Druckfarbe im Offsetdruck mit einem Andruckgewicht von 2 g/m² auf Werttitelpapier ("Banknotenpapier")
- Trocknen des Andrucks bei 60°C für 12h
- Einsetzen des Andrucks in eine Xenon-Lichttestkammer (oder äquivalentes Lichtechtheits-Bestimmungsgerät) und Bestrahlung gemäß der Europäischen Blau-Wollskala für die gewünschte Wollskala-Stufe
- Die quantitative Lichtechtheit des Andrucks ergibt sich aus dem Vergleich der Intensität der Lumineszenzemission des Andrucks vor und nach Behandlung (bzw. dem Vergleich eines unbehandelten Teils des Andrucks mit einem behandelten Teil des gleichen Andrucks); Normierte Intensität bei Wollskala-Stufe = (Intensität bei Wollskala-Stufe) / (Intensität vor Behandlung)

Bevorzugt erreichen die Kapsel-Lumineszenzpigmente mindestens Wollskala 3, das heißt, sie besitzen bei Wollskala 3 noch eine normierte Intensität von über 50%.

Bevorzugt haben die unterschiedlichen Kapsel-Lumineszenzpigmente die im Wesentlichen gleiche Lichtechtheit, d.h. die auf den Anfangswert normierten Intensitäten der unterschiedlichen Kapsel-Lumineszenzpigmente untescheiden sich bei Wollskala 3 gemäß Testverfahren B untereinander um weniger als 30 Prozentpunkte, weiter bevorzugt weniger als 20 Prozentpunkte, insbesondere bevorzugt weniger als 10 Prozentpunkte. Hiermit wird sichergestellt, dass der korrekte Farbeindruck von Mischfarben z.B. auch nach längerer Sonneneinstrahlung oder nach starker maschineller UV-Bestrahlung noch vorhanden ist.

Beispielsweise kann bei Wollskala 3 eine erstes Kapsel-Lumineszenzpigment noch 61% seiner anfänglichen Intensität besitzen und eine zweites Kapsel-Lumineszenzpigment noch 65% seiner anfänglichen Intensität besitzen. Sie unterscheiden sich also nur um 4 Prozentpunkte untereinander.

In bestimmten Fällen zeigen verschiedene Lumineszenzstoffe jedoch einen unterschiedlichen Verlauf in ihrer Lichtstabilität. Beispielsweise kann ein erster Lumineszenzstoff nach kurzer Bestrahlung (Wollskala 1) einen deutlichen Intensitätsabfall zeigen und sich dann stabilisieren, während ein anderer Lumineszenzstoff einen kontinuierlichen Intensitätsabfall aufweist, sodass beide Lumineszenzstoffe am Ende wieder die gleiche relative Intensität besitzen, sich zwischenzeitlich jedoch unterscheiden. In diesem Fall würde man bei kurzer Bestrahlungsdauer eine Verschiebung des Lumineszenzfarbtons wahrnehmen, welche bei längerer Bestrahlung wieder verschwindet.

Um diesen Effekt zu vermeiden, unterscheiden sich bevorzugt die auf den Anfangswert normierten Intensitäten der unterschiedlichen Kapsel-Lumineszenzpigmente gemäß Testverfahren B bei Wollskala 1 um weniger als 30 Prozentpunkte, weiter bevorzugt weniger als 20 Prozentpunkte, insbesondere bevorzugt weniger als 10 Prozentpunkte. Weiterhin unterscheiden sich bevorzugt die auf den Anfangswert normierten Intensitäten der unterschiedlichen Kapsel-Lumineszenzpigmente gemäß Testverfahren B bei Wollskala 2 um weniger als 30 Prozentpunkte, weiter bevorzugt weniger als 20 Prozentpunkte, insbesondere bevorzugt weniger als 10 Prozentpunkte.

Gemäß einer bevorzugten Ausführungsform beträgt der Farbunterschied des Farbeindrucks der Lumineszenzemission bei Wollskala 3 relativ zum Farbeindruck der Lumineszenzemission vor dem Wollskala-Test gemäß Testverfahren B für Kapsel-Lumineszenzpigment-Mischungen ΔD < 0,03, bevorzugt ΔD < 0,02, besonders bevorzugt ΔD < 0,01. Gemäß einer weiteren bevorzugten Ausführungsform beträgt gemäß Testverfahren B für Kapsel-Lumineszenzpigment-Mischungen bei Wollskala 2 der Farbunterschied ΔD < 0,03, bevorzugt ΔD < 0,02, besonders bevorzugt ΔD < 0,01. Gemäß einer weiteren bevorzugten Ausführungsform beträgt gemäß Testverfahren B für Kapsel-Lumineszenzpigment-Mischungen der Farbunterschied ΔD < 0,03, bevorzugt ΔD < 0,02, besonders bevorzugt ΔD < 0,01.

Dabei bezeichnet ΔD den euklidischen Abstand der x,y-Koordinaten der Normfarbwerte der Lumineszenzemission auf der CIE-Normfarbtafel: ΔD = [(x₁-x₂)²+(y₁-y₂)²]^{0,5}.

Durch diese Gleichartigkeit der Lichtechtheit der unterschiedlichen Kapsel-Lumineszenzpigmente wird erreicht, dass keine sichtbare Verschiebung der Farbtöne, z.B. durch Bleichen einer einzelnen Lumineszenzfarbkomponente aus einem Gemisch, auftreten kann.

Gemäß einer bevorzugten Ausführungsform wird in mindestens einem Kapsel-Lumineszenzpigment zum Angleichen des Verlaufs der Lichtstabilität eine Mischung aus mehreren Lumineszenzstoffen mit unterschiedlichen Verläufen der Lichtstabilität eingesetzt. Beispielsweise verhält sich eine Mischung aus einem kontinuierlich stabilen Lumineszenzstoff und einem kleinen Anteil eines instabilen Lumineszenzstoffes, welcher bereits bei Wollskala 1 ausbleicht, identisch mit einem einzelnen Lumineszenzstoff, welcher einen geringen Abfall der Lumineszenzintensität bei kurzer Bestrahlungsdauer aufweist und dann stabil bleibt.

Gemäß einer weiteren bevorzugten Ausführungsform wird ein Gemisch aus zwei Kapsel-Lumineszenzpigmenten mit im Wesentlichen gleichem Farbeindruck, jedoch unterschiedlichen Lichtechtheiten eingesetzt, um in Summe die im Wesentlichen gleiche Lichtechtheit wie ein drittes Kapsel-Lumineszenzpigment mit unterschiedlichem Farbeindruck der Lumineszenzemission zu erreichen.

Damit werden für die verschiedenen Kapsel-Lumineszenzpigmente zu zwei verschiedenen Wollskala-Stufen identische normierte Lumineszenzintensitäten erreicht und für die anderen Zeiten näherungsweise angeglichen. Der Betrachter sieht somit keine signifikanten Unterschiede in den Lumineszenzintensitäten und Farbtönen der unterschiedlichen Kapsel-Lumineszenzpigmente bzw. deren Mischungen.

Weiterhin ist es möglich, die Lichtstabilität eines ersten Lumineszenzstoffes durch Zugabe eines zweiten Lumineszenzstoffes zu beeinflussen, selbst wenn die Anregungsstrahlung nur in der Lage ist, den ersten Lumineszenzstoff anzuregen. Dazu muss der zweite Lumineszenzstoff in der Lage sein, durch Energietransfer die Anregungsenergie des ersten Lumineszenzstoffes zu übernehmen, wodurch die Lichtechtheit des ersten Lumineszenzstoffes deutlich zunimmt.

Gemäß einer bevorzugten Ausführungsform wird in mindestens einem Kapsel-Lumineszenzpigment ein Energietransfersystem zwischen zwei Lumineszenzstoffen benutzt. Bevorzugt handelt es sich bei einem der beiden Lumineszenzstoffe um einen im UV-Bereich anregbaren Lumineszenzstoff, der im sichtbaren Bereich emittiert, und beim anderen der beiden Lumineszenzstoff um einen im sichtbaren Bereich anregbaren Lumineszenzstoff, welcher im sichtbaren Bereich emittiert.

Gemäß einer bevorzugten Ausführungsform handelt es sich bei dem Lumineszenzstoff um einen Fluoreszenzstoff. Gemäß einer weiteren bevorzugten Ausführungsform handelt es sich bei dem Lumineszenzstoff um einen Phosphoreszenzstoff. Gemäß einer weiter bevorzugten Ausführungsform handelt es sich bei dem Lumineszenzstoff um einen im UV-Bereich anregbaren Lumineszenzstoff, welcher im sichtbaren Spektralbereich emittiert. Gemäß einer weiteren bevorzugten Ausführungsform handelt es sich um einen im sichtbaren Spektralbereich anregbaren Lumineszenzstoff, welcher im sichtbaren Spektralbereich emittiert. Bei den Lumineszenzstoffen kann es sich sowohl um rein organische Moleküle handeln, als auch um metallorganische Komplexe. Explizit ausgenommen sind rein anorganische Lumineszenzstoffe. Diese verfügen zwar oft über exzellente Lichtstabilitäten und chemische Stabilitäten, erreichen jedoch nicht die Lumineszenzintensität von organischen Lumineszenzstoffen.

Gemäß einer bevorzugten Ausführungsform werden zwei oder mehr Lumineszenzstoffe gemischt, um ein Energietransfersystem bzw. FRET-System zu erstellen, in welchem der erste Lumineszenzstoff nach Anregung seine Anregungsenergie partiell oder vollständig an den zweiten Lumineszenzstoff abgeben kann. Im Falle eines derartigen FRET-Systems ist einer der beteiligten Lumineszenzstoffe bevorzugt im UV-Bereich anregbar und emittiert im sichtbaren Spektralbereich, während der andere Lumineszenzstoff im sichtbaren Spektralbereich anregbar ist und im sichtbaren Spektralbereich emittiert.

Beispiele für Stoffklassen von UV-anregbaren bzw. im sichtbaren Spektralbereich anregbaren Lumineszenzstoffen, welche im sichtbaren Spektralbereich emittieren, sind rein organische Lumineszenzstoffe und lumineszierende Metallkomplexe. Mögliche Stoffklassen sind zum Beispiel Diarylpolyene, Diarylethene, Arylacetylene, Oxazole, Pyrazole, Benzazole, Anthrone, Chinone, Cyanine, Rhodamine, Oxazine, Phenoxazine, Thiazine, Phenothiazine, Perylene, Terylene, Coumarine, Benzoxazinone oder Benzothiazinone sowie Seltenerdmetallkomplexe, wie z.B. β-Diketonat-Seltenerdmetallkomplexe oder Dipicolinat-Seltenerdmetallkomplexe, dabei bevorzugt neutral geladene Seltenerdmetallkomplexe. Andere organische Lumineszenzstoffklassen sind ebenfalls einsetzbar.

Insbesondere werden als Stoffklasse für im sichtbaren Spektralbereich anregbare Lumineszenzstoffe welche im Sichtbaren emittieren aufgrund ihrer hohen Lichtstabilität bevorzugt Perylenfarbstoffe eingesetzt.

Beispiele für FRET-Systeme sind z.B. Mischungen aus einem grün-gelb anregbaren Fluoreszenzstoff und einem grün-gelb emittierenden Fluoreszenzstoff, beispielsweise eine Mischung mit einem Gewichtsverhältnis von 1:15 aus 2,9-Bis(2,6-diisopropylphenyl)anthra[2,1,9-def:6,5,10-d'e'f']diisochinolin-1,3,8,10(2H,9H)-tetraon (C₄₈H₄₂N₂O₄, ein grün anregbarer Perylenstoff welcher eine orange Lumineszenzemission besitzt, im weiteren "F-Orange" genannt) und N-(2-(4-oxo-4H-benzo[d][1,3]oxazin-2-yl)phenyl)naphthalen-2-sulfonamid (C₂₄H₁₆N₂O₄S, ein UV-anregbarer Lumineszenzstoff welcher eine grüne Lumineszenzemission besitzt, im weiteren "F-Grün" genannt).

Gemäß einer bevorzugten Ausführungsform enthält das Kapsel-Lumineszenzpigment daher ein Energietransfersystem (FRET-System), bevorzugt ein FRET-System aus einem UV-anregbaren Lumineszenzstoff als Donor und einem im sichtbaren Bereich anregbaren Lumineszenzstoff als Akzeptor. Bevorzugt handelt es sich bei dem Akzeptor um einen Perylenfarbstoff.

Gemäß einer bevorzugten Ausführungsform sind die erfindungsgemäßen Kapsel-Lumineszenzpigmente mit UV-A-Strahlung (d.h. im Wellenlängenbereich von 315 nm bis 380 nm), insbesondere bei 365 nm, anregbar. Gemäß einer weiteren bevorzugten Ausführungsform sind die Kapsel- mit UV-B-Strahlung (d.h. im Wellenlängenbereich von 280 nm bis 315 nm), insbesondere bei 311 nm, anregbar. Gemäß einer weiteren bevorzugten Ausführungsform sind die Kapsel-Lumineszenzpigmente mit UV-C-Strahlung (d.h. im Wellenlängenbereich von 100 nm bis 280 nm), insbesondere bei 254 nm, anregbar. Gemäß einer weiteren bevorzugten Ausführungsform werden zwei Lumineszenzfarbsysteme erzeugt, welche sich separat im UV-A (bevorzugt 365 nm) und UV-C (bevorzugt 254 nm) anregen lassen und dabei unterschiedliche Farben zeigen. Beispielsweise erscheinen drei bedruckte Stellen eines Wertdokuments unter UV-A jeweils rot, grün und blau, dieselben Stellen erscheinen unter UV-C-Bestrahlung jedoch mit anderen Farben, z.B. gelb, blau, violett. Dies ist mit zwei verschiedenen Methoden realisierbar. Zum einen kann in einer Druckfarbe eine Mischung aus unterschiedlichen, jeweils UV-A- oder UV-C-anregbaren Kapsel-Lumineszenzpigmenten vorhanden sein. Zum anderen kann in einer Druckfarbe ein Kapsel-Lumineszenzpigment enthalten sein, welches eine Mischung aus unterschiedlichen, jeweils UV-A- bzw. UV-C-anregbaren Lumineszenzstoffen enthält.

Gemäß einer weiteren bevorzugten Ausführungsform ist das mindestens eine erfindungsgemäße Kapsel-Lumineszenzpigment sowohl mit UV-A-Strahlung, als auch mit UV-C-Strahlung anregbar. Bevorzugt zeigt das Kapsel-Lumineszenzpigment bei Anregung mit UV-A- und UV-C-Strahlung jeweils unterschiedliche Emissionsspektren.

Besonders bevorzugt sind alle Kapsel-Lumineszenzpigmente sowohl mit UV-A-Strahlung, als auch mit UV-C-Strahlung anregbar, und zeigen bei Anregung mit UV-A- und UV-C-Strahlung jeweils unterschiedliche Emissionsspektren

Gemäß einer weiteren bevorzugten Ausführungsform ist mindestens ein Kapsel-Lumineszenzpigment des Lumineszenzfarbsystems sowohl mit UV-A-Strahlung, als auch mit UV-C-Strahlung anregbar und zeigt bei Anregung mit UV-A- und UV-C-Strahlung jeweils ein unterschiedliches Emissionsspektrum, und mindestens ein weiteres Kapsel-Lumineszenzpigment des Lumineszenzfarbsystems zeigt bei Anregung mit UV-A- und UV-C-Strahlung jeweils das gleiche Emissionsspektrum.

Gemäß einer weiteren bevorzugten Ausführungsform ist das mindestens eine Kapsel-Lumineszenzpigment sowohl mit UV-A-Strahlung, als auch mit UV-C-Strahlung anregbar. Bevorzugt zeigt das Kapsel-Lumineszenzpigment bei Anregung mit UV-A- und UV-C-Strahlung jeweils das gleiche Emissionsspektrum.

Besonders bevorzugt sind alle Kapsel-Lumineszenzpigmente des Lumineszenzfarbsystems sowohl mit UV-A-Strahlung, als auch mit UV-C-Strahlung anregbar, und zeigen bei Anregung mit UV-A- und UV-C-Strahlung jeweils gleiche Emissionsspektren.

Lumineszenzfarbsysteme mit unterschiedlich anregbaren Komponenten sind im Stand der Technik allgemein bekannt (siehe z.B. die EP 2602119 A1).

Bei den im Kern der Kapsel-Lumineszenzpigmente eingesetzten Lumineszenzstoffen kann es sich um fluoreszierende (schnell abklingende) oder phosphoreszierende (langsam abklingende) Stoffe handeln.

Die meisten rein organischen Lumineszenzstoffe sind Fluorophore und emittieren nach Anregung bereits nach wenigen Nanosekunden. Einige Lumineszenzstoffe können jedoch z.B. nach Anregung einen angeregten Triplettzustand ausbilden, welcher nur langsam, also phosphoreszierend, durch Lichtemission in den Grundzustand übergeht. Ebenso zeigen viele metallorganische Komplexe eine langsame Abklingzeit im Bereich von Mikrosekunden bis Millisekunden. Die wissenschaftliche Einteilung verschiedener Stoffe in Fluoreszenz und Phosphoreszenz ist dabei umstritten und nicht einheitlich definiert. Im Sinne dieser Erfindung wird die Unterscheidung in fluoreszierende und phosphoreszierende Stoffe daher allein basierend auf der Länge der Abklingzeit der Lumineszenzemission getroffen.

Der Aspekt der Abklingzeit ist bei Wertdokumenten insbesondere für die Maschinenlesbarkeit auf automatisierten Sensoren von Bedeutung. Hier wird bevorzugt die Phosphoreszenz der Aufdrucke des Wertdokuments gemessen, weil diese unabhängig von der störenden Fluoreszenz des Untergrunds und unabhängig von Verunreinigungen etc. gemessen werden kann.

Im Rahmen dieser Erfindung gelten Stoffe mit einer Abklingzeit >50µs daher als phosphoreszierend und Stoffe mit einer Abklingzeit <50 µs als fluoreszierend, da in diesem Bereich die Grenze der einfachen maschinellen Unterscheidbarkeit verläuft.

Gemäß einer bevorzugten Ausführungsform handelt es sich daher bei dem mindestens einem eingesetzten Lumineszenzstoff um einen langsam abklingenden (phosphoreszierenden) Stoff, bevorzugt um einen Lumineszenzstoff mit einer Abklingzeit von mehr als 50 µs, besonders bevorzugt mehr als 100 µs. Insbesondere handelt es sich bevorzugt um einen Seltenerdkomplex mit einer Abklingzeit von mehr als 100 µs.

Unabhängig davon, ob die Lumineszenz des Druckbilds maschinell ausgewertet wird, ergeben sich hier durch die Verwendung von Kapsel-Lumineszenzpigmenten mehrere Anwendungsvorteile. Erst durch die gleichartigen Lichtechtheiten und Chemikalienstabilitäten aller Kapsel-Lumineszenzpigmente des erfindungsgemäßen Lumineszenzfarbsystems ist eine zuverlässige maschinelle Auswertung möglich.

Beispielsweise werden bei Überprüfung der unterschiedlichen Farbkomponenten keine alterungsbedingten Drifts beobachtet, d.h. die Lumineszenzfarbverhältnisse bleiben konstant. Insbesondere kann es sich nicht ereignen, dass eine Farbkomponente durch Verblassen oder Einwirkung eines Lösemittels nicht mehr detektierbar ist. Es wird daher immer das korrekte gesamte Druckbild gemessen, was eine Echtheitsbestimmung deutlich vereinfacht. Beim Verwenden einer Mischung aus Lumineszenzpigmenten gemäß dem Stand der Technik, welche jeweils unterschiedliche Eigenschaften besitzen, werden jedoch oft Fehlsignale erzeugt, z.B. weil eine Lumineszenzmarkierung durch Einwirkung von Lösungsmitteln verschmiert (z.B. bei einer Lackierung der Banknote zur Erhöhung der Verschmutzungsresistenz) und die Markierung daher nicht mehr die vom Sensor erwartete Position und Größe besitzt, oder weil aufgrund von Umweltfaktoren wie Feuchtigkeit und Sonneneinstrahlung eine einzelne Farbkomponente vernichtet wurde und daher das gemessene Lumineszenz-Druckbild nicht mit dem erwarteten Lumineszenz-Druckbild übereinstimmt.

Gemäß einer bevorzugten Ausführungsform besitzen die Kapsel-Lumineszenzpigmente keine bzw. nur eine schwache (absorptionsbasierte) Eigenfärbung. Hierdurch ist es möglich, ein für das menschliche Auge nicht oder kaum sichtbares Druckbild auf das Wertdokument aufzubringen, welches erst durch UV-Bestrahlung sichtbar wird. Ebenso wird durch den Aufdruck der lumineszierenden Druckfarben das restliche (absorptionsbasierte) Farbbild des Wertdokuments nicht gestört. Beispielsweise kann auf einer Banknote in einem ansonsten weißen oder hellen Bereich der Banknote ein unsichtbares Symbol aufgedruckt werden, welches dem Betrachter bei Tageslicht nicht auffällt, jedoch im Dunklen bei UV-Bestrahlung deutlich erkennbar ist. Bevorzugt beträgt der durch das Kapsel-Lumineszenzpigment verursachte (absorptionsbasierte) Farbunterschied (z.B. im Vergleich zu einem Aufdruck ohne das Kapsel-Lumineszenzpigment) ΔE < 10, weiter bevorzugt ΔE < 5, insbesondere bevorzugt ΔE < 2.

Dabei bezeichnet ΔE den euklidischen Abstand der (L*,a*,b*)-Koordinaten der beiden (absorptionsbasierten) Farb-Orte.

Gemäß einem weiteren bevorzugten Ausführungsfall besitzen die Kapsel-Lumineszenzpigmente eine (absorptionsbasierte) Eigenfärbung. Der Aufdruck mit den lumineszierenden Druckfarben ist dann sichtbar, und kann z.B. Teil des restlichen (absorptionsbasierten) Farbbilds des Wertdokuments sein.

Gemäß einer weiteren bevorzugten Ausführungsform sind in der Druckfarbe der Kapsel-Lumineszenzpigmente zusätzliche (nichtlumineszierende, absorptionsbasierte) Körperfarbpigmente enthalten, um den Aufdruck gezielt einzufärben, beziehungsweise wird das Kapsel-Lumineszenzpigment einer "normalen" Druckfarbe zugegeben. Das lumineszierende Pigment wird also gleichzeitig mit dem restlichen Farbbild der Banknote aufgebracht. Beispielsweise wird das Kapsel-Lumineszenzpigment der bereits ein Farbpigment und ein Absorberpigment enthaltenden Stichtiefdruckfarbe eines Infrarot-Schnitts einer Banknotenserie zugefügt.

Gemäß einem bevorzugten Anwendungsfall sind die (absorptionsbasierte) Körperfarbe und der durch Lumineszenz emittierte Farbeindruck eines Aufdrucks der erfindungsgemäßen Stichtiefdruckfarbe gleich.

Hierdurch ist es möglich, z.B. eine mehrfarbige Flagge oder ein Portrait einer Staatsperson farblich auf dem Wertdokument abzubilden, und dann im Dunklen bei Bestrahlung mit UV-Licht durch die Lumineszenz das gleiche Farbbild wiederzuerkennen.

Gemäß einem bevorzugten Anwendungsfall haben die Kapsel-Lumineszenzpigmente des Lumineszenzfarbsystems einheitliche Korngrößen. Bevorzugt besitzen die Pigmente eine Korngröße (d99) kleiner als 15 µm, besonders bevorzugt kleiner als 10 µm, ganz besonders bevorzugt kleiner als 6 µm.

Gemäß einer bevorzugten Ausführungsform unterscheidet sich die Korngröße (d99) der Kapsel-Lumineszenzpigmente mit unterschiedlichen Lumineszenzemissionen untereinander um weniger als 30%, weiter bevorzugt um weniger als 20%, insbesondere bevorzugt um weniger als 10%.

Gemäß einer weiteren bevorzugten Ausführungsform unterscheidet sich die Korngröße (d50) der Kapsel-Lumineszenzpigmente mit unterschiedlichen Lumineszenzemissionen untereinander um weniger als 30%, weiter bevorzugt um weniger als 20%, insbesondere bevorzugt um weniger als 10%.

Gemäß einer bevorzugten Ausführungsform werden neben den Kapsel-Lumineszenzpigmenten noch weitere Zusatzstoffe eingesetzt, um in der Applikation bestimmte Effekte zu erzielen. Hierunter fallen beispielsweise die erfindungsgemäßen maschinenlesbaren Merkmalsstoffe. Weitere typische Additive sind z.B. Aufheller, Stabilisatoren, Emulgatoren, den Brechungsindex anpassende Substanzen, Verdünner, Duftstoffe, etc.

### Ausführungsbeispiele

### Beispiel 1: Stichtiefdruckfarbe mit einem magnetischem Merkmalsstoff und roten und grünen Kapsel-Lumineszenzpigmenten mit Thermoplast-Kern und Kondensationspolymer-Hülle

Als magnetischer Merkmalsstoff wird ein mit mehreren Schichten aus Siliziumoxid beziehungsweise Titanoxid versehenes Magnetitpigment C₄ verwendet, dessen Herstellung beispielsweise in der Schrift EP1179507A1 (Example 3) beschrieben wird. Durch die Mehrfachbeschichtung besitzt das Pigment nur noch eine geringe weißlich-gelbe Eigenfärbung.

Als rot lumineszierendes Pigment wird ein Kapsel-Lumineszenzpigment mit einem Polymethylmethacrylat-Kern und einer Melamin-Formaldehyd-Hülle verwendet, welches als im Kern gelöste Lumineszenzstoffe eine Mischung aus den drei Lumineszenzstoffen N-(2-(4-oxo-4H-benzo[d][1,3]oxazin-2-yl)phenyl)naphtha-len-2-sulfonamid (C₂₄H₁₆N₂O₄S), 2,9-Bis(2,6-diisopropylphenyl)-5,6,12,13-tetraphenoxyanthra[2,1,9-def:6,5,10-d'e'f'] diisochinolin-1,3,8,10(2H,9H)-tet-raon (C₇₂H₅₈N₂O₈) und Eu(TTA)₃(TPPO)₂ (TTA = Thenoyltrifluoroaceton; TPPO = Triphenylphosphinoxid) enthält. Es entspricht einem Kapsel-Lumineszenzpigment gemäß der bevorzugten Variante 1.

Der Lumineszenzstoff Eu(TTA)₃(TPPO)₂ dient dabei insbesondere dem Angleichen der Lichtechtheit bei Wollskala 1 zwischen den rot lumineszierenden und grün lumineszierenden Kapsel-Lumineszenzpigmenten dieses Ausführungsbeispiels.

### Herstellung des roten Kapsel-Lumineszenzpigments:

27 g Polymethylmethacrylat (PMMA) der mittleren Molmasse 100000 g/mol, 1500 mg N-(2-(4-oxo-4H-benzo[d] [1,3]oxazin-2-yl)phenyl)naphthalen-2-sulfonamid (C₂₄H₁₆N₂O₄S), 100 mg 2,9-Bis(2,6-diisopropylphenyl)-5,6,12,13-tetraphenoxyanthra[2,1,9-def:6,5,10-d'e'f ]diisochinolin-1,3,8,10(2H,9H)-te-traon (C₇₂H₅₈N₂O₈), 100 mg Eu(TTA)₃(TPPO)₂ und 250 mg Dibutylphthalat werden unter Rühren in 500 g Dichlormethan gelöst (Lösung A).

78 g Melamin und 111 g Paraformaldehyd werden in 1000 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung B).

In 2475 g Wasser werden 25 g Natriumdodecylsulfat gelöst (Lösung C). Lösung A wird zu Lösung C gegeben und 30 Sekunden mit einem Dispergierwerkzeug (Ultraturrax) dispergiert. Während dieser Zeit werden 200 ml Lösung B und 10 ml Essigsäure zugegeben. Anschließend wird die Dispersion mit einem Magnetrührer weiter gerührt.

Nach 2 h Rühren bei Raumtemperatur wird die Dispersion auf 39°C erhitzt und 3 h bei dieser Temperatur gehalten, um das Dichlormethan zu verdampfen. Anschließend werden weitere 200 ml der Lösung B zugegeben und die Temperatur auf 70°C erhöht. Diese Temperatur wird weitere 3 h gehalten. Die erhaltenen Partikel werden von der Lösung separiert, mit Wasser gewaschen und bei 60°C getrocknet.

Es werden ca. 60 g eines bei Bestrahlung mit UV-Licht der Wellenlänge 365 nm rot lumineszierenden Pigments erhalten.

Als grün lumineszierendes Pigment wird ein Kapsel-Lumineszenzpigment mit einem Polymethylmethacrylat-Kern und einer Melamin-Formaldehyd-Hülle verwendet, welches als im Kern gelösten Lumineszenzstoff N-(2-(4-oxo-4H-benzo[d][1,3]oxazin-2-yl)phenyl)naphthalen-2-sulfonamid (C₂₄H₁₆N₂O₄S) enthält. Es entspricht einem Kapsel-Lumineszenzpigment gemäß der bevorzugten Variante 1.

### Herstellung des grünen Kapsel-Lumineszenzpigments:

27 g Polymethylmethacrylat (PMMA) der mittleren Molmasse 100000 g/mol, 1500 mg N-(2-(4-oxo-4H-benzo[d] [1,3]oxazin-2-yl)phenyl)naphthalen-2-sulfonamid (C₂₄H₁₆N₂O₄S) und 250 mg Dibutylphthalat werden unter Rühren in 500 g Dichlormethan gelöst (Lösung A).

78 g Melamin und 111 g Paraformaldehyd werden in 1000 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung B).

In 2475 g Wasser werden 25 g Natriumdodecylsulfat gelöst (Lösung C). Lösung A wird zu Lösung C gegeben und 30 Sekunden mit einem Dispergierwerkzeug (Ultraturrax) dispergiert. Während dieser Zeit werden 200 ml Lösung B und 10 ml Essigsäure zugegeben. Anschließend wird die Dispersion mit einem Magnetrührer weiter gerührt.

Nach 2 h Rühren bei Raumtemperatur wird die Dispersion auf 39°C erhitzt und 3 h bei dieser Temperatur gehalten, um das Dichlormethan zu verdampfen. Anschließend werden weitere 200 ml der Lösung B zugegeben und die Temperatur auf 70°C erhöht. Diese Temperatur wird weitere 3 h gehalten. Die erhaltenen Partikel werden von der Lösung separiert, mit Wasser gewaschen und bei 60°C getrocknet.

Es werden ca. 60 g eines bei Bestrahlung mit UV-Licht der Wellenlänge 365 nm grün lumineszierenden Pigments erhalten.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

Die Formulierung der Stichtiefdruckfarbe ist angelehnt an die banknotentaugliche Formulierung "Green F" aus Tabelle 3 in Schrift WO1992019689A1, wobei anstatt der 24 Gewichtsprozent des Füllstoffs Calciumcarbonat die folgenden Komponenten eingesetzt werden: 22 Gewichtsprozent des Magnetpigments C₄, sowie 1 Gewichtsprozent des grünen Kapsel-Lumineszenzpigments und 1 Gewichtsprozent des roten Kapsel-Lumineszenzpigments. Die Viskosität der Stichtiefdruckfarbe bei 40°C wird auf ca. 12 Pas eingestellt.

Wird mit der erhaltenen Stichtiefdruckfarbe ein Wertdokument im Stichtiefdruckverfahren bedruckt, so zeigt der Andruck eine grüne Körperfarbe und besitzt sowohl maschinell auslesbare magnetische Eigenschaften als auch eine gelbe Lumineszenz.

Die verwendeten Kapsel-Lumineszenzpigmente haben eine Chemikalienstabilität gemäß Testverfahren A30 bzw. A5 von über 97% für alle darin beschriebenen Chemikalien. Entsprechend zeigen auch die Stichtiefdrucke keine wahrnehmbare Veränderung der Lumineszenz nach Kontakt mit diesen Chemikalien.

Die Änderung des Farbeindrucks der Lumineszenz ΔD einer 1:1-Mischung aus roten und grünen Kapsel-Lumineszenzpigmenten gemäß Testverfahren B beträgt nach der bestandenen Wollskala 3 weniger als 0,005. Somit zeigen auch die Stichtiefdrucke keine wahrnehmbare Verschiebung des Farbtons der Lumineszenz nach längerer Lichteinstrahlung.

Hätte man statt der Kapsel-Lumineszenzpigmente beispielsweise rote und grüne anorganische Lumineszenzpigmente mit einer Pigmentierung von jeweils 10 Gewichtsprozent eingesetzt, so wäre dies nur möglich, wenn 18 Gewichtsprozent eines oder mehrerer der weiteren Druckfarbenbestandteile ersetzt werden. Es werden jedoch hohe Anforderungen an Stichtiefdruckfarben gestellt. Unter anderem müssen die rheologischen Eigenschaften für die Anwendung geeignet sein, die Verdampfungsrate der Farbe muss eingestellt werden und der fertige Andruck muss eine hohe Resistenz gegen Beschädigung beim Waschen und Knicken der Banknote aufweisen. Ein derart hoher Ersatz von Druckfarbenbestandteilen führt daher zwangsweise zu einer massiven Verschlechterung der Eigenschaften.

Hätte man alternativ statt der Kapsel-Lumineszenzpigmente beispielsweise rote und grüne organische Lumineszenzstoffe in der gleichen Pigmentierung von jeweils 1 Gewichtsprozent eingesetzt, kann die Formulierung zwar ohne Ersatz von weiteren Druckfarbenbestandteilen erstellt werden. Bei Kontakt des Andrucks mit organischen Lösemitteln können die Lumineszenzstoffe jedoch herausgelöst werden, was dann zu einem oder mehreren der folgenden Nachteile führt: Verlust an Lumineszenzintensität, Veränderung des Farbeindrucks der Lumineszenz und "Verschmieren" des Lumineszenzbilds. Weiterhin besitzen einzelne organische Lumineszenzstoffe oft unterschiedliche Lichtstabilitäten. Ohne zusätzliche Anpassung der Lichtstabilität z.B. durch Zumischen weiterer Lumineszenzstoffe, wird sich also bei längerer Lichtbestrahlung der Farbeindruck der Lumineszenz verändern. Durch das Zumischen weiterer ungeschützter Lumineszenzstoffe wird die Angreifbarkeit durch verschiedene Lösemittel jedoch abermals erhöht.

Die erfindungsgemäße Formulierung mit Kapsel-Lumineszenzpigmenten bringt somit entscheidende Vorteile und erlaubt das Herstellen einer im Banknotendruck einsetzbaren multifunktionalen Stichtiefdruckfarbe.

### Beispiel 2: Stichtiefdruckfarbe mit einem NIR-Absorber und roten und grünen Kapsel-Lumineszenzpigmenten mit Duromer-Kern und Kondensationspolymer-Hülle

Als rot lumineszierendes Pigment wird ein Kapsel-Lumineszenzpigment mit einem Polyharnstoff-Kern und einer Melamin-Formaldehyd-Hülle verwendet, welches als im Kern verteilte bzw. gelöste Lumineszenzstoffe eine Mischung aus den drei Lumineszenzstoffen N-(2-(4-oxo-4H-benzo[d][1,3]oxazin-2-yl)phenyl)naph-thalen-2-sulfonamid (C₂₄H₁₆N₂O₄S), 2,9-Bis(2,6-diisopropylphenyl)-5,6,12,13-tetraphenoxyanthra[2,1,9-def:6,5,10-d'e'f']diisochinolin-1,3,8,10(2H,9H)-tetra-on (C₇₂H₅₈N₂O₈) und Eu(TTA)₃(TPPO)₂ (TTA = Thenoyltrifluoroaceton; TPPO = Triphenylphosphinoxid) enthält. Es entspricht einem Kapsel-Lumineszenzpigment gemäß der bevorzugten Variante 2.

Der Lumineszenzstoff Eu(TTA)₃(TPPO)₂ dient dabei insbesondere dem Angleichen der Lichtechtheit bei Wollskala 1 zwischen den rot lumineszierenden und grün lumineszierenden Kapsel-Lumineszenzpigmenten dieses Ausführungsbeispiels.

### Herstellung des roten Lumineszenzpigments:

In einem Laborkneter werden die Komponenten
70,5 g Isophorondiisocyanat,
24,2 g Benzamid,
15,2 g N-(2-(4-oxo-4H-benzo[d] [1,3]oxazin-2-yl)phenyl)naphthalen-2-sul-fonamid (C₂₄H₁₆N₂O₄S),
0,6 g 2,9-Bis(2,6-diisopropylphenyl)-5,6,12,13-tetraphenoxyanthra[2,1,9-def:6,5,10-d'e'f']diisochinolin-1,3,8,10(2H,9H)-tetraon (C₇₂H₅₈N₂O₈),
6,1 g Eu(TTA)₃(TPPO)₂
bei 140°C für 30 min geknetet. Anschließend werden 25,10 g Melamin zugegeben und die Mischung bis zum Erstarren geknetet. Das erhaltene Pulver wird mit einer Rührwerkskugelmühle mit ca. 1 mm großen Zirkonoxidmahlkugeln auf eine Korngröße (d99) von 10µm vermahlen.

Von diesem Pulver werden 100 g in 1,3 l Wasser gegeben und mit einem Homogenisator dispergiert. Zu dieser Mischung werden 900 ml einer 20%igen wässrigen Lösung aus Hexahydroxymethylmelamin gegeben und mit 8 ml konzentrierter Essigsäure versetzt. Die erhaltene Reaktionsmischung wird für 2 h bei 70 °C erhitzt. Das erhaltene beschichtete Pigment wird abzentrifugiert und mit 31 Wasser gewaschen. Nach einem letzten Zentrifugationsschritt wird das Pigment bei 60°C in einem Trockenschrank getrocknet.

Es werden ca. 175 g eines bei Bestrahlung mit UV-Licht der Wellenlänge 365 nm rot lumineszierenden Pigments erhalten.

Als grün lumineszierendes Pigment wird ein Kapsel-Lumineszenzpigment mit einem Polyharnstoff-Kern und einer Melamin-Formaldehyd-Hülle verwendet, welches als im Kern verteilten bzw. gelösten Lumineszenzstoff N-(2-(4-oxo-4H-benzo[d][1,3]oxazin-2-yl)phenyl)naphthalen-2-sulfonamid (C₂₄H₁₆N₂O₄S) enthält. Es entspricht einem Kapsel-Lumineszenzpigment gemäß der bevorzugten Variante 2.

### Herstellung des grünen Lumineszenzpigments:

In einem Laborkneter werden die Komponenten
73,2 g Isophorondiisocyanat,
26,1 g Benzamid,
15,3 g N-(2-(4-oxo-4H-benzo[d] [1,3]oxazin-2-yl)phenyl)naphthalen-2-sulfonamid (C₂₄H₁₆N₂O₄S),
bei 140°C für 30 min geknetet. Anschließend werden 25,10 g Melamin zugegeben und die Mischung bis zum Erstarren geknetet. Das erhaltene Pulver wird mit einer Rührwerkskugelmühle mit ca. 1 mm großen Zirkonoxidmahlkugeln auf eine Korngröße (d99) von 10µm vermahlen.

Von diesem Pulver werden 100 g in 1,3 l Wasser gegeben und mit einem Homogenisator dispergiert. Zu dieser Mischung werden 900 ml einer 20%igen wässrigen Lösung aus Hexahydroxymethylmelamin gegeben und mit 8 ml konzentrierter Essigsäure versetzt. Die erhaltene Reaktionsmischung wird für 2 h bei 70 °C erhitzt. Das erhaltene beschichtete Pigment wird abzentrifugiert und mit 31 Wasser gewaschen. Nach einem letzten Zentrifugationsschritt wird das Pigment bei 60°C in einem Trockenschrank getrocknet.

Es werden ca. 175 g eines bei Bestrahlung mit UV-Licht der Wellenlänge 365 nm grün lumineszierenden Pigments erhalten.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

Die Formulierung der Stichtiefdruckfarbe ist angelehnt an die banknotentaugliche Formulierung aus Ausführungsbeispiel 2 in Schrift EP1790701B2, welche eine Stichtiefdruckfarbe mit 35 Gewichtsprozent eines farblosen anorganischen NIR-Absorbers und 15 Gewichtsprozent des Füllstoffs Calciumcarbonat beschreibt. Im Rahmen dieses Ausführungsbeispiels werden anstatt der 15 Gewichtsprozent Calciumcarbonat nur 13 Gewichtsprozent Calciumcarbonat eingesetzt sowie 1 Gewichtsprozent des roten Kapsel-Lumineszenzpigments und 1 Gewichtsprozent des grünen Kapsel-Lumineszenzpigments.
Die Viskosität der Stichtiefdruckfarbe bei 40°C wird auf ca. 10 Pas eingestellt.

Wird mit der erhaltenen Stichtiefdruckfarbe ein Wertdokument im Stichtiefdruckverfahren bedruckt, so zeigt der Andruck keine bzw. nur eine sehr geringe Körperfarbe und sowohl eine maschinell auslesbare spezifische Signatur in der Infrarot-Absorption als auch eine gelbe Lumineszenz.

Die verwendeten Kapsel-Lumineszenzpigmente haben eine Chemikalienstabilität gemäß Testverfahren A30 bzw. A5 von über 97% für alle darin beschriebenen Chemikalien. Entsprechend zeigen auch die Stichtiefdrucke keine wahrnehmbare Veränderung der Lumineszenz nach Kontakt mit diesen Chemikalien.

Die Änderung des Farbeindrucks der Lumineszenz ΔD einer 1:1-Mischung aus roten und grünen Kapsel-Lumineszenzpigmenten gemäß Testverfahren B beträgt nach der bestandenen Wollskala 3 weniger als 0,01. Somit zeigen auch die Stichtiefdrucke keine wahrnehmbare Verschiebung des Farbtons der Lumineszenz nach längerer Lichteinstrahlung.

### Beispiel 3: Stichtiefdruckfarbe mit einem phosphoreszierenden Merkmalsstoff und blauen und grünen Kapsel-Lumineszenzpigmenten mit mehreren Thermoplast-Kernen und Additionspolymer-Hülle

Als phosphoreszierender Merkmalsstoff wird ein anorganisches Phosphorpigment ohne Körperfarbe verwendet, welches aus Partikeln eines Samarium-dotierten Lanthan-Aluminium-Germanats LaAlGe₂O₇:Sm_{0,03} mit einer Korngröße (D99) von 12µm besteht. Die Herstellung erfolgt über das Mischen der jeweiligen einzelnen Elementoxide im stöchiometrischen Verhältnis gefolgt von einer Kalzinierung in Luft bei 1250 °C über 12 Stunden und der Vermahlung auf die Zielkorngröße.

Das Phosphorpigment zeigt bei Anregung mit Licht der Wellenlänge 404 nm eine strukturierte rot-orange Phosphoreszenz-Emission mit drei Hauptbanden im Wellenlängen-Bereich zwischen 550 nm und 650 nm und einer Abklingzeit von ungefähr 1,7 Millisekunden.

Als blau lumineszierendes Pigment wird ein Kapsel-Lumineszenzpigment mit mehreren Polymethylmethacrylat-Kernen und einer Polyharnstoff-Hülle verwendet, welches als in den Kernen gelösten Lumineszenzstoff 2,5-Thiophendiylbis (5-tert-butyl-1,3-benzoxazol) enthält. Es entspricht einem Kapsel-Lumineszenzpigment gemäß der bevorzugten Variante 3.

### Herstellung des blauen Lumineszenzpigments:

50 g PMMA mit einem durchschnittlichen Molgewicht von 100000 g/mol werden mit 5 g 2,5-Thiophendiylbis(5-tert-butyl-1,3-benzoxazol) (C₂₆H₂₆N₂O₂S) in 1 Liter Chloroform gelöst. Die Mischung wird in einen Reaktor mit 5 Liter einer wässrigen Lösung von 1% Natriumdodecylsulfat gegeben und mit einem Homogenisator für 5 min dispergiert. Anschließend wird das Chloroform unter Rühren bei 500 mbar verdampft. Die verbleibende wässrige Phase enthält nach Entfernen des Chloroforms ca. 55 g Kugeln aus PMMA mit einer mittleren Partikelgröße von ca. 2 µm, welche den gelösten Lumineszenzstoff enthalten (im Folgenden "PMMA B" genannt). Mit einer Ultrazentrifuge werden die Partikel dreimal mit je 1 Liter Wasser gewaschen und bei 60°C anschließend getrocknet.

In einem Laborkneter werden die Komponenten
79,63 g des Isocyanurat-Trimers von Isophorondiisocyanat
22,46 g Benzamid
2,00 g Harnstoff
14,12 g Melamin
10 g PMMA B
bei 180°C bis zum Erstarren geknetet. Das erhaltene Granulat wird auf eine Korngröße (d99) von 11 µm gemahlen.

Es werden ca. 50 g eines bei Bestrahlung mit UV-Licht der Wellenlänge 365 nm blau lumineszierenden Pigments erhalten.

Als grün lumineszierendes Pigment wird ein Kapsel-Lumineszenzpigment mit mehreren Polymethylmethacrylat-Kernen und einer Polyharnstoff-Hülle verwendet, welches als in den Kernen gelösten Lumineszenzstoff N-(2-(4-oxo-4H-benzo[d][1,3]oxazin-2-yl)phenyl)naphthalen-2-sulfonamid (C₂₄H₁₆N₂O₄S) enthält. Es entspricht einem Kapsel-Lumineszenzpigment gemäß der bevorzugten Variante 3.

### Herstellung des grünen Lumineszenzpigments:

50 g PMMA mit einem durchschnittlichen Molgewicht von 100000 g/mol werden mit 5 g N-(2-(4-oxo-4H-benzo[d][1,3]oxazin-2-yl)phenyl)naphthalen-2-sulfonamid (C₂₄H₁₆N₂O₄S) in 1 Liter Dichlormethan gelöst. Die Mischung wird in einen Reaktor mit 5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft. Die verbleibende wässrige Phase enthält nach Entfernen des Dichlormethans ca. 55 g Kugeln aus PMMA mit einer mittleren Partikelgröße von ca. 2 µm, welche den gelösten Lumineszenzstoff enthalten (im Folgenden "PMMA G" genannt). Mit einer Ultrazentrifuge werden die Partikel dreimal mit je 1 Liter Wasser gewaschen und bei 60°C anschließend getrocknet.

In einem Laborkneter werden die Komponenten
79,63 g des Isocyanurat-Trimers von Isophorondiisocyanat
22,46 g Benzamid
2,00 g Harnstoff
14,12 g Melamin
10 g PMMA G
bei 180°C bis zum Erstarren geknetet. Das erhaltene Granulat wird auf eine Korngröße (d99) von 11 µm gemahlen.

Es werden ca. 50 g eines bei Bestrahlung mit UV-Licht der Wellenlänge 365 nm grün lumineszierenden Pigments erhalten.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

Die Formulierung der Stichtiefdruckfarbe ist angelehnt an die banknotentaugliche Formulierung aus Ausführungsbeispiel 10, Tabelle 8 in Schrift US5569701 welche eine grüne Stichtiefdruckfarbe mit 37,83 Gewichtsprozent des Füllstoffs Calciumcarbonat beschreibt. Im Rahmen dieses Ausführungsbeispiels wird ein Teil des Calciumcarbonats durch den phosphoreszierenden Merkmalsstoff und die Kapsel-Lumineszenzpigmente ersetzt, so dass der phosphoreszierende Merkmalsstoff einen Anteil von 30 Gewichtsprozent an der Stichtiefdruckfarbe besitzt, und die blauen bzw. grünen Kapsel-Lumineszenzpigmente einen Anteil von jeweils 2 Gewichtsprozent besitzen. Die Viskosität der Stichtiefdruckfarbe bei 40°C wird auf ca. 10 Pas eingestellt.

Wird mit der erhaltenen Stichtiefdruckfarbe ein Wertdokument im Stichtiefdruckverfahren bedruckt, so erhält man einen Andruck mit grüner Körperfarbe und sowohl eine maschinell auslesbare spektrale Struktur in der Phosphoreszenz-Emission als auch eine blaugrüne Lumineszenz.

Die verwendeten Kapsel-Lumineszenzpigmente haben eine Chemikalienstabilität gemäß Testverfahren A30 bzw. A5 von über 80% für alle darin beschriebenen Chemikalien. Entsprechend zeigen auch die Stichtiefdrucke keine starke Veränderung der Lumineszenz nach Kontakt mit diesen Chemikalien.

Die Änderung des Farbeindrucks der Lumineszenz ΔD einer 1:1-Mischung aus blauen und grünen Kapsel-Lumineszenzpigmenten gemäß Testverfahren B beträgt nach der bestandenen Wollskala 3 weniger als 0,002. Somit zeigen auch die Stichtiefdrucke keine wahrnehmbare Verschiebung des Farbtons der Lumineszenz nach längerer Lichteinstrahlung.

### Beispiel 4: Stichtiefdruckfarbe mit einem magnetischem Merkmalsstoff und roten, grünen und blauen Kapsel-Lumineszenzpigmenten mit Thermoplast-Kern und Kondensationspolymer-Hülle

Bei diesem Beispiel handelt es sich um eine Abwandlung der Stichtiefdruckfarbe aus Beispiel 1. Zusätzlich zu den roten und grünen Kapsel-Lumineszenzpigmenten werden blaue Kapsel-Lumineszenzpigmente eingesetzt, um ein RGB-Farbsystem aufzustellen.

Bei dem blauen Kapsel-Lumineszenzpigment handelt es sich dabei um ein zu den roten und grünen Kapsel-Lumineszenzpigmenten analog aufgebautes und hergestelltes Pigment der bevorzugten Variante 1, welches jedoch relativ zur Kernmasse 5 Gewichtsprozent des Lumineszenzstoffes 4,4'-Bis(benzoxazol-2-yl)stilben (C₂₈H₁₈N₂O₂) enthält. Alle drei Kapsel-Lumineszenzpigmente lumineszieren bei UV-Bestrahlung mit 365 nm.

Bei gleichbleibender Gesamtpigmentierung der Stichtiefdruckfarbe kann nun durch Variation der relativen Anteile an roten, grünen und blauen Kapsel-Lumineszenzpigmenten der Farbeindruck der Lumineszenz in weiten Bereichen eingestellt werden.

In einer ersten bevorzugten Ausführung werden die relativen Anteile an roten, grünen und blauen Kapsel-Lumineszenzpigmenten so gewählt, dass ein weißer Farbeindruck der Lumineszenz entsteht.

In einer zweiten bevorzugten Ausführung werden die relativen Anteile an roten, grünen und blauen Kapsel-Lumineszenzpigmenten so gewählt, dass der Farbeindruck der Lumineszenz mit dem Farbeindruck der Körperfarbe der Stichtiefdruckfarbe übereinstimmt.

In einer dritten bevorzugten Ausführung werden die relativen Anteile an roten, grünen und blauen Kapsel-Lumineszenzpigmenten so gewählt, dass der Farbeindruck der Lumineszenz mit der Komplementärfarbe des Farbeindrucks der Körperfarbe der Stichtiefdruckfarbe übereinstimmt.

### Beispiel 5: Stichtiefdruckfarbe mit einem NIR-Absorber und roten, grünen und blauen Kapsel-Lumineszenzpigmenten mit Duromer-Kern und Kondensationspolymer-Hülle

Bei diesem Beispiel handelt es sich um eine Abwandlung der Stichtiefdruckfarbe aus Beispiel 2. Zusätzlich zu den roten und grünen Kapsel-Lumineszenzpigmenten werden blaue Kapsel-Lumineszenzpigmente eingesetzt, um ein RGB-Farbsystem aufzustellen.

Bei dem blauen Kapsel-Lumineszenzpigment handelt es sich dabei um ein zu den roten und grünen Kapsel-Lumineszenzpigmenten analog aufgebautes und hergestelltes Pigment der bevorzugten Variante 2, welches jedoch relativ zur Kernmasse 5 Gewichtsprozent des Lumineszenzstoffes 4,4'-Bis(benzoxazol-2-yl)stilben (C₂₈H₁₈N₂O₂) enthält. Alle drei Kapsel-Lumineszenzpigmente lumineszieren bei UV-Bestrahlung mit 365 nm.

Bei gleichbleibender Gesamtpigmentierung der Stichtiefdruckfarbe kann nun durch Variation der relativen Anteile an roten, grünen und blauen Kapsel-Lumineszenzpigmenten der Farbeindruck der Lumineszenz in weiten Bereichen eingestellt werden.

In einer ersten bevorzugten Ausführung werden die relativen Anteile an roten, grünen und blauen Kapsel-Lumineszenzpigmenten so gewählt, dass ein weißer Farbeindruck der Lumineszenz entsteht. Mit solch einer Stichtiefdruckfarbe hergestellte Andrucke zeigen keine bzw. nur eine sehr geringe Körperfarbe, sind also "unsichtbare" Andrucke, welche jedoch bei Bestrahlung mit UV-Licht der Wellenlänge 365 nm weiß lumineszieren.

In einer zweiten und dritten bevorzugten Ausführung wird der Stichtiefdruckfarbe zusätzlich ein Körperfarbpigment zugegeben, so dass sie eine Eigenfarbe annimmt, z.B. wird das Farbpigment "C.I. Pigment Blue 15:3" mit 3 Gewichtsprozent in die Farbe eingebracht und dafür die Menge an Calciumcarbonat um 3 Gewichtsprozent reduziert, um eine blaue Körperfarbe zu erreichen.

In der zweiten bevorzugten Ausführung werden die relativen Anteile an roten, grünen und blauen Kapsel-Lumineszenzpigmenten so gewählt, dass der Farbeindruck der Lumineszenz mit dem Farbeindruck der Körperfarbe der Stichtiefdruckfarbe übereinstimmt.

In der dritten bevorzugten Ausführung werden die relativen Anteile an roten, grünen und blauen Kapsel-Lumineszenzpigmenten so gewählt, dass der Farbeindruck der Lumineszenz mit der Komplementärfarbe des Farbeindrucks der Körperfarbe der Stichtiefdruckfarbe übereinstimmt.

### Beispiel 6: Stichtiefdruckfarbe mit einem phosphoreszierenden Merkmalsstoff und roten, grünen und blauen Kapsel-Lumineszenzpigmenten mit mehreren Thermoplast-Kernen und Additionspolymer-Hülle

Bei diesem Beispiel handelt es sich um eine Abwandlung der Stichtiefdruckfarbe aus Beispiel 3. Zusätzlich zu den blauen und grünen Kapsel-Lumineszenzpigmenten werden rote Kapsel-Lumineszenzpigmente eingesetzt, um ein RGB-Farbsystem aufzustellen.

Bei dem roten Kapsel-Lumineszenzpigment handelt es sich dabei um ein zu den blauen und grünen Kapsel-Lumineszenzpigmenten analog aufgebautes und hergestelltes Pigment der bevorzugten Variante 3, welches relativ zur Kernmasse gleichzeitig 5,5 Gewichtsprozent des Lumineszenzstoffes N-(2-(4-oxo-4H-benzo[d][1,3]oxazin-2-yl)phenyl)naphthalen-2-sulfonamid (C₂₄H₁₆N₂O₄S), 0,35 Gewichtsprozent des Lumineszenzstoffes Eu(TTA)₃(TPPO)₂ und 0,35 Gewichtsprozent des Lumineszenzstoffes 2,9-Bis(2,6-diisopropylphenyl)-5,6,12,13-tetraphenoxyanthra[2,1,9-def:6,5,10-d'e'f']diisochinolin-1,3,8,10(2H,9H)-tetraon (C₇₂H₅₈N₂O₈) enthält. Alle drei Kapsel-Lumineszenzpigmente lumineszieren bei UV-Bestrahlung mit 365 nm.

Bei gleichbleibender Gesamtpigmentierung der Stichtiefdruckfarbe kann nun durch Variation der relativen Anteile an roten, grünen und blauen Kapsel-Lumineszenzpigmenten der Farbeindruck der Lumineszenz in weiten Bereichen eingestellt werden.

In einer ersten bevorzugten Ausführung werden die relativen Anteile an roten, grünen und blauen Kapsel-Lumineszenzpigmenten so gewählt, dass ein weißer Farbeindruck der Lumineszenz entsteht.

In einer zweiten bevorzugten Ausführung werden die relativen Anteile an roten, grünen und blauen Kapsel-Lumineszenzpigmenten so gewählt, dass der Farbeindruck der Lumineszenz mit dem Farbeindruck der Körperfarbe der Stichtiefdruckfarbe übereinstimmt.

In einer dritten bevorzugten Ausführung werden die relativen Anteile an roten, grünen und blauen Kapsel-Lumineszenzpigmenten so gewählt, dass der Farbeindruck der Lumineszenz mit der Komplementärfarbe des Farbeindrucks der Körperfarbe der Stichtiefdruckfarbe übereinstimmt.

### Beispiel 7: Stichtiefdruckfarbe mit einem magnetischem Merkmalsstoff und einem grünen Kapsel-Lumineszenzpigment mit Thermoplast-Kern und Kondensationspolymer-Hülle

Bei diesem Beispiel handelt es sich um eine Abwandlung der Stichtiefdruckfarbe aus Beispiel 1, in der neben dem magnetischen Merkmalsstoff nur das grüne Kapsel-Lumineszenzpigment verwendet wird.
Die Formulierung der Stichtiefdruckfarbe ist angelehnt an die banknotentaugliche Formulierung "Green F" aus Tabelle 3 in Schrift WO1992019689A1, wobei anstatt der 24 Gewichtsprozent des Füllstoffs Calciumcarbonat die folgenden Komponenten eingesetzt werden: 23 Gewichtsprozent des Magnetpigments C₄, sowie 1 Gewichtsprozent des grünen Kapsel-Lumineszenzpigments.

Wird mit der erhaltenen Stichtiefdruckfarbe ein Wertdokument im Stichtiefdruckverfahren bedruckt, so zeigt der Andruck eine grüne Körperfarbe und besitzt sowohl maschinell auslesbare magnetische Eigenschaften als auch eine grüne Lumineszenz.

## Patentansprüche

1. Multifunktionale Stichtiefdruckfarbe enthaltend mindestens ein Kapsel-Lumineszenzpigment und mindestens einen weiteren maschinenlesbaren Merkmalsstoff,
wobei das mindestens eine Kapsel-Lumineszenzpigment zumindest einen Kern mit einem Lumineszenzstoff und eine den zumindest einen Kern verkapselnde Hülle aufweist,
wobei der Kern auf einem thermoplastischen Polymer oder einem organischen Additionspolymer basiert und
wobei die Lumineszenzstoffe jeweils organische oder metallorganische Lumineszenzstoffe sind und
wobei die Hülle aus einem Kondensationspolymer oder einem organischen Additionspolymer besteht und
wobei die Stichtiefdruckfarbe bei 40°C eine Viskosität im Bereich von 3 Pas bis 25 Pas, bevorzugt im Bereich von 5 Pas bis 15 Pas aufweist.

2. Stichtiefdruckfarbe nach Anspruch 1, enthaltend mindestens zwei Kapsel-Lumineszenzpigmente, die unterschiedliche Emissionsspektren der Lumineszenzemission aufweisen,
wobei für jede der mindestens zwei Kapsel-Lumineszenzpigmente das Material des zumindest einen Kerns, das Material der Hülle und die Dicke der Hülle so aufeinander abgestimmt sind, dass die zumindest zwei Kapsel-Lumineszenzpigmente eine im Wesentlichen gleiche chemische Stabilität aufweisen.

3. Stichtiefdruckfarbe nach Anspruch 1 oder 2, wobei der maschinenlesbare Merkmalsstoff ausgewählt ist aus: NIR-Absorbern, magnetischen Stoffen und lumineszierenden Stoffen.

4. Stichtiefdruckfarbe nach einem der Ansprüche 1 bis 3, wobei der maschinenlesbare Merkmalsstoff einen Anteil von mehr als 10 Gewichtsprozent, bevorzugt mehr als 20 Gewichtsprozent, besonders bevorzugt mehr als 30 Gewichtsprozent an der Stichtiefdruckfarbe hat.

5. Stichtiefdruckfarbe nach einem der Ansprüche 1 bis 4, wobei die Stichtiefdruckfarbe zusätzlich mindestens ein Körperfarbpigment enthält.

6. Stichtiefdruckfarbe nach einem der Ansprüche 1 bis 5, wobei der mindestens eine maschinenlesbare Merkmalsstoff, das mindestens eine Kapsel-Lumineszenzpigment und, falls enthalten, das mindestens eine Körperfarbpigment zusammen einen Anteil von weniger als 80 Gewichtsprozent, bevorzugt weniger als 60 Gewichtsprozent, besonders bevorzugt weniger als 45 Gewichtsprozent an der Stichtiefdruckfarbe haben.

7. Stichtiefdruckfarbe nach einem der Ansprüche 1 bis 6, das mindestens drei Kapsel-Lumineszenzpigmente mit jeweils unterschiedlichem Farbeindruck der Lumineszenzemission umfasst, wobei bevorzugt die jeweiligen Farbeindrücke der Lumineszenzemission rot, grün bzw. blau sind.

8. Druckverfahren, umfassend das Bedrucken eines Bedruckstoffes mit einer Stichtiefdruckfarbe nach einem der Ansprüche 1 bis 7 im Stichtiefdruckverfahren, wobei der Bedruckstoff bevorzugt ein Papiersubstrat oder ein Polymersubstrat ist, oder er aus einer Kombination von Papier und Polymer besteht.

9. Druckerzeugnis, erhältlich durch das Druckverfahren nach Anspruch 8, wobei das Druckerzeugnis bevorzugt ein Wertdokument, besonders bevorzugt eine Banknote ist.

10. Druckerzeugnis nach Anspruch 9, wobei mindestens ein erster Teil des Druckerzeugnisses mit einer ersten Stichtiefdruckfarbe nach einem der Ansprüche 1 bis 7 bedruckt ist und mindestens ein zweiter Teil des Druckerzeugnisses mit einer zweiten Stichtiefdruckfarbe bedruckt ist, wobei die zweite Stichtiefdruckfarbe bevorzugt nach einem der Ansprüche 1 bis 7 definiert ist.

11. Druckerzeugnis nach Anspruch 10, wobei sich die zweite Stichtiefdruckfarbe anhand eines maschinenlesbaren Merkmals von der ersten Stichtiefdruckfarbe unterscheiden lässt.

12. Druckerzeugnis nach Anspruch 11, wobei das maschinenlesbare Merkmal ausgewählt ist aus: NIR-Absorption, Magnetisierung und Lumineszenz.

13. Druckerzeugnis nach Anspruch 11 oder 12, wobei die zweite Stichtiefdruckfarbe keinen maschinenlesbaren Merkmalsstoff enthält.

14. Druckerzeugnis nach Anspruch 11 oder 12, wobei die zweite Stichtiefdruckfarbe einen anderen maschinenlesbaren Merkmalsstoff enthält als die erste Stichtiefdruckfarbe.

15. Druckerzeugnis nach einem der Ansprüche 10 bis 14, wobei sich die zweite Stichtiefdruckfarbe durch den Farbeindruck ihrer Körperfarbe von der ersten Stichtiefdruckfarbe unterscheidet.

16. Druckerzeugnis nach einem der Ansprüche 10 bis 14, kombiniert mit Anspruch 5, wobei der Farbeindruck der Körperfarbe für die erste und die zweite Stichtiefdruckfarbe gleich ist.

## Claims

1. A multifunctional intaglio printing ink including at least one capsule luminescent pigment and at least one further machine-readable feature substance,
wherein the at least one capsule luminescent pigment has at least one core with a luminescent substance and one shell encapsulating the at least one core,
wherein the core is based on a thermoplastic polymer or an organic addition polymer, and
wherein the luminescent substances respectively are organic or metalorganic luminescent substances and
wherein the shell consists of a condensation polymer or an organic addition polymer, and
wherein the intaglio printing ink at 40°C has a viscosity in the region of 3 Pas to 25 Pas, preferably in the region of 5 Pas to 15 Pas.

2. The intaglio printing ink according to claim 1 including at least two capsule luminescent pigments which have different emission spectra of the luminescence emission,
wherein for each of the at least two capsule luminescent pigments the material of the at least one core, the material of the shell, and the thickness of the shell are mutually coordinated such that the at least two capsule luminescent pigments have a substantially same chemical stability.

3. The intaglio printing ink according to claim 1 or 2, wherein the machine-readable feature substance is selected from: NIR absorbers, magnetic substances and luminescent substances.

4. The intaglio printing ink according to any of claims 1 to 3, wherein the machine-readable feature substance has a portion of more than 10 weight percent, preferably more than 20 weight percent, particularly preferably more than 30 weight percent in the intaglio printing ink.

5. The intaglio printing ink according to any of claims 1 to 4, wherein the intaglio printing ink additionally includes at least one body color pigment.

6. The intaglio printing ink according to any of claims 1 to 5, wherein the at least one machine-readable feature substance, the at least one capsule luminescent pigment and, if included, the at least one body color pigment together have a portion of less than 80 weight percent, preferably less than 60 weight percent, particularly preferably less than 45 weight percent in the intaglio printing ink.

7. The intaglio printing ink according to any of claims 1 to 6, which comprises at least three capsule luminescent pigments respectively having a different color impression of the luminescence emission, wherein the respective color impressions of the luminescence emission preferably are red, green or blue.

8. A printing method comprising the printing of a print substrate with an intaglio printing ink according to any of claims 1 to 7 in the intaglio printing method, wherein the print substrate is preferably a paper substrate or a polymer substrate, or it consists of a combination of paper and polymer.

9. A printed product obtainable by the printing method according to claim 8, wherein the printed product is preferably a value document, particularly preferably a bank note.

10. The printed product according to claim 9, wherein at least a first part of the printed product is printed with a first intaglio printing ink according to any of claims 1 to 7 and at least a second part of the printed product is printed with a second intaglio printing ink, wherein the second intaglio printing ink is defined preferably according to any of claims 1 to 7.

11. The printed product according to claim 10, wherein the second intaglio printing ink can be distinguished from the first intaglio printing ink by a machine-readable feature.

12. The printed product according to claim 11, wherein the machine-readable feature is selected from: NIR absorption, magnetization and luminescence.

13. The printed product according to claim 11 or 12, wherein the second intaglio printing ink does not include any machine-readable feature substance.

14. The printed product according to claim 11 or 12, wherein the second intaglio printing ink includes a different machine-readable feature substance than the first intaglio printing ink.

15. The printed product according to any of claims 10 to 14, wherein the second intaglio printing ink differs from the first intaglio printing ink in the color impression of its body color.

16. The printed product according to any of claims 10 to 14, combined with claim 5, wherein the color impression of the body color is the same for the first and the second intaglio printing ink.

## Revendications

1. Encre multifonctionnelle d'impression en creux par gravure contenant au moins un pigment capsulaire luminescent et au moins une autre substance caractéristique lisible par machine, cependant que le au moins un pigment capsulaire luminescent comporte au moins un noyau ayant une substance luminescente et une coque encapsulant le au moins un noyau,
cependant que le noyau est basé sur un polymère thermoplastique ou sur un polymère d'addition organique, et
cependant que les substances luminescentes sont respectivement des substances luminescentes organiques ou organo-métalliques, et
cependant que la coque consiste en un polymère de condensation ou en un polymère d'addition organique, et
cependant que l'encre d'impression en creux par gravure présente à 40° une viscosité comprise entre 3 Pa s et 25 Pa s, de préférence comprise entre 5 Pa s et 15 Pa s.

2. Encre d'impression en creux par gravure selon la revendication 1, contenant au moins deux pigments capsulaires luminescents qui présentent différents spectres d'émission de l'émission de luminescence,
cependant que, pour chacun des au moins deux pigments capsulaires luminescents, la matière du au moins un noyau, la matière de la coque et l'épaisseur de la coque sont adaptées de telle manière entre elles que les au moins deux pigments capsulaires luminescents présentent une stabilité chimique essentiellement identique.

3. Encre d'impression en creux par gravure selon la revendication 1 ou 2, cependant que la substance caractéristique lisible par machine est choisie parmi : absorbeurs NIR, substances magnétiques et substances luminescentes.

4. Encre d'impression en creux par gravure selon une des revendications de 1 à 3, cependant que la substance caractéristique lisible par machine représente plus de 10 pourcent en poids, de préférence plus de 20 pourcent en poids, particulièrement de préférence plus de 30 pourcent en poids de l'encre d'impression en creux par gravure.

5. Encre d'impression en creux par gravure selon une des revendications de 1 à 4, cependant que l'encre d'impression en creux par gravure contient en outre au moins un pigment de couleur de corps.

6. Encre d'impression en creux par gravure selon une des revendications de 1 à 5, cependant que la au moins une substance caractéristique lisible par machine, le au moins un pigment capsulaire luminescent et, s'il y en a un, le au moins un pigment de couleur de corps représentent ensemble moins de 80 pourcent en poids, de préférence moins de 60 pourcent en poids, particulièrement de préférence moins de 45 pourcent en poids de l'encre d'impression en creux par gravure.

7. Encre d'impression en creux par gravure selon une des revendications de 1 à 6, laquelle comprend au moins trois pigments capsulaires luminescents présentant respectivement un effet différent de couleur de l'émission de luminescence, cependant que, de préférence, les effets respectifs de couleur de l'émission de luminescence sont rouge, vert ou bleu.

8. Procédé d'impression comprenant l'impression d'un matériau d'impression avec une encre d'impression en creux par gravure selon une des revendications de 1 à 7 par procédé d'impression en creux par gravure, cependant que le matériau d'impression est de préférence un substrat de papier ou un substrat de polymère ou consiste en une combinaison de papier et de polymère.

9. Produit imprimé pouvant être obtenu par le procédé d'impression selon la revendication 8, cependant que le produit imprimé est de préférence un document de valeur, particulièrement de préférence un billet de banque.

10. Produit imprimé selon la revendication 9, cependant qu'au moins une première partie du produit imprimé est imprimée avec une première encre d'impression en creux par gravure selon une des revendications de 1 à 7 et au moins une deuxième partie du produit imprimé est imprimée avec une deuxième encre d'impression en creux par gravure, cependant que la deuxième encre d'impression en creux par gravure est de préférence définie par une des revendications de 1 à 7.

11. Produit imprimé selon la revendication 10, cependant que la deuxième encre d'impression en creux par gravure peut être distinguée de la première encre d'impression en creux par gravure à l'aide d'une caractéristique lisible par machine.

12. Produit imprimé selon la revendication 11, cependant que la caractéristique lisible par machine est choisie parmi : absorbtion NIR, magnétisation et luminescence.

13. Produit imprimé selon la revendication 11 ou 12, cependant que la deuxième encre d'impression en creux par gravure ne contient pas de substance caractéristique lisible par machine.

14. Produit imprimé selon la revendication 11 ou 12, cependant que la deuxième encre d'impression en creux par gravure contient une autre substance caractéristique lisible par machine que la première encre d'impression en creux par gravure.

15. Produit imprimé selon une des revendications de 10 à 14, cependant que la deuxième encre d'impression en creux par gravure se distingue de la première encre d'impression en creux par gravure par l'effet de couleur de sa couleur de corps.

16. Produit imprimé selon une des revendications de 10 à 14 combinée à la revendication 5, cependant que l'effet de couleur de la couleur de corps est le même pour la première et la deuxième encre d'impression en creux par gravure.
